# EUROPÄISCHE PATENTANMELDUNG

(11) **EP 2 332 806 A2**
(43) Veröffentlichungstag der Anmeldung: **15.06.2011**
(21) Anmeldenummer: 10194364.5
(22) Anmeldetag: 09.12.2010
(51) Int. Cl.: B62B 7/00

(54) **Mehrfachkinderwagen mit Sitzbereichen für mindestens zwei Kinder**

(30) Priorität: 09.12.2009 DE 102009044840
(71) Anmelder: Clean Mobile AG, 82008 Unterhaching (DE)
(72) Erfinder: Müller, Reinhard Prof.Dr., 86899 Landsberg am Lech (DE); Müller-Syhre, Heike, 86899 Landsberg am Lech (DE); Rübsamen, Susanne, 81479 München (DE)
(74) Vertreter: Moore, Joanne Camilla

(57) **Zusammenfassung**

Mehrfachkinderwagen (1) mit Sitzbereichen für mindestens zwei Kinder weist zumindest drei Räder (4, 5) auf, von denen zumindest eines durch einen mindestens einen Elektromotor (14) umfassenden Hilfsantrieb unterstützend angetrieben ist.

## Beschreibung

Die Erfindung betrifft einen Mehrfachkinderwagen mit Sitzbereichen für mindestens zwei Kinder, insbesondere einen Mehrfachkinderwagen für mindestens vier Kinder, bei dem die Sitzbereiche in zwei einander gegenüberliegenden Reihen quer zur Fahrtrichtung angeordnet sind.

Derartige Mehrfachkinderwagen sind auch als Krippenkinderwagen bekannt. Sie haben den Vorteil, dass sie den Transport mehrerer kleiner Kinder gleichzeitig erlauben, und sind daher beispielsweise für Tagesmütter oder Krippen geeignet. Sie sind jedoch meist verhältnismäßig schwer und nicht sehr wendig, so dass ihre Bedienung einen hohen Kraftaufwand erfordern kann.

Aufgabe der Erfindung ist es, einen Mehrfachkinderwagen bereitzustellen, der besonders leicht zu bewegen und zu lenken ist und eine hohe Gebrauchsfunktionalität aufweist.

Erfindungsgemäß wird diese Aufgabe mit dem Gegenstand der unabhängigen Patentansprüche gelöst. Vorteilhafte Weiterbildungen der Erfindung sind Gegenstand der abhängigen Patentansprüche.

Ein erfindungsgemäßer Mehrfachkinderwagen mit Sitzbereichen für mindestens zwei Kinder weist zumindest drei Räder auf, von denen zumindest eines durch einen mindestens einen Elektromotor umfassenden Hilfsantrieb unterstützend angetrieben ist. Zum Betrieb des Elektromotors ist eine netzunabhängige Energiequelle, insbesondere eine Anzahl von Akkumulatoren, vorgesehen.

Der Elektromotor ist beispielsweise als Nabendirektmotor ausgebildet, kann aber auch als Kombination eines Getriebemotors oder eines Kettenantriebs mit Untersetzung ausgeführt sein.

In einer Ausführungsform weist der Mehrfachkinderwagen ein einzelnes, als Schwenkrad ausgebildetes Vorderrad und zwei unabhängig voneinander durch jeweils einen Elektromotor antreibbare Hinterräder auf. Dabei wird hier und im folgenden unter einem einzelnen Rad auch ein Doppelrad, also zwei gemeinsam aufgehängte Räder, verstanden.

Diese Ausführungsform weist den Vorteil auf, dass der Mehrfachkinderwagen besonders wendig ist. Zum einen trägt dazu die Ausbildung des nicht angetriebenen Vorderrads als Schwenkrad bei, zum anderen ist es vorteilhaft, dass die beiden Hinterräder unabhängig voneinander angetrieben werden. Dadurch ist es nämlich möglich, eine Richtungsänderung des Mehrfachkinderwagens durch unterschiedliche Drehmomente an den beiden Hinterrädern zu veranlassen. Insbesondere kann nicht nur der Betrag des Drehmoments, sondern auch die Drehrichtung der beiden Hinterräder während der Richtungsänderung verschieden sein, so dass der Mehrfachkinderwagen einen besonders kleinen Wendekreis aufweist.

Bei dieser Ausführungsform ist demnach die Bedienbarkeit des Mehrfachkinderwagens nicht nur durch den Vortrieb des Hilfsantriebs verbessert, so dass das Schieben des Mehrfachkinderwagens insbesondere an Steigungen erleichtert ist. Es ist auch dessen Wendigkeit durch die Ausgestaltung des Hilfsantriebs erhöht. Dies ist besonders vorteilhaft bei großen Mehrfachkinderwagen für beispielsweise 6 oder mehr Kinder, die allein aufgrund ihrer Abmessungen schon schwer zu manövrieren sind.

Für den mindestens einen Elektromotor kommen verschiedene Konzepte in Frage. Bei bürstenlosen Motoren ist der Rotor mit Dauermagneten versehen. Der Stator weist dazu Spulenwicklungen auf, die mit einer geeignet gepulsten Gleichspannung beaufschlagt werden, dabei ein Wechsel-Magnetfeld erzeugen, das mit den Dauermagneten zusammenwirkt die wiederum den Rotor in Umdrehung versetzen. Dabei können im Bereich des Rotors Sensoren beispielsweise in Form von Hilfswicklungen oder Hall-Sensoren vorgesehen sein, um die momentane Position des Rotors zu bestimmen, die bei der Ansteuerung des Stroms durch die Spulenwicklungen berücksichtigt wird. Es sind auch sensorlose Motorgestaltungen denkbar, bei denen die aktuelle Rotorstellung durch eine Induktionsspannung in einer Wicklung oder mehreren Wicklungen des Stators bestimmt wird.

In weiteren Ausgestaltungen können auch Synchronmaschinen oder auch Asynchronmaschinen eingesetzt werden, wobei diese häufig als Wechselstrommaschinen bezeichnet werden. Asynchronmaschinen haben den Vorteil, ohne Bürsten betrieben werden zu können, weil ein umlaufendes elektromagnetisches Feld den als Kurschlusswicklung ausgestalteten Rotor mitdreht, in dem das Wechselfeld ein Magnetfeld induziert.

Alternativ dazu können auch Gleichstrommaschinen eingesetzt werden, bei denen dann Bürsten zur Bestromung der Rotorwicklung eingesetzt werden.

Die Wicklungen des Rotors und des Stators von Synchronmaschinen und Gleichstrommaschinen können im Reihenschluss oder im Nebenschluss betrieben werden. Grundsätzlich sind alle Kombinationen denkbar, d.h. eine synchrone Reihenschluss-Maschine, eine synchrone Nebenschluss-Maschine, eine Gleichstrom-Reihenschluss-Maschine und eine Gleichstrom-Nebenschluss-Maschine. Synchronmaschinen können auch mit einem Dauermagneten als Rotor ausgestaltet werden, wobei auch eine Kombination mit einer Rotor-Wicklung denkbar ist.

Synchron-Maschinen, die im Nebenschluss betrieben werden können, haben dabei einen Drehmomentverlauf über der Drehzahl, der weitgehend konstant ist. Im Gegensatz dazu nimmt das verfügbare Drehmoment an einer im Reihenschluss betriebenen Synchronmaschine mit höherer Drehzahl ab und entsprechend bei geringeren Drehzahlen zu.

Bei asynchronen Maschinen oder auch bei Synchron-Nebenschluss-Maschinen beobachtet man einen Kipppunkt, bei dem ein maximales Drehmoment vorliegt. Beim Unterschreiten einer gewissen Drehzahl nimmt das verfügbare Drehmoment ab. Bei Motoren mit Reihenschluss-Verhalten lässt sich unter Last ein stärkerer Drehzahlabfall beobachten. Motoren mit Reihenschluss-Verhalten eignen sich dabei besonders für den Gegenstand der Anmeldung, weil in einem weiten Drehzahlbereich ein Betrieb ohne Schaltgetriebe d.h. mit einer feststehenden Untersetzung möglich ist.

Dabei haben sich besonders Gleichstrom-Reihenschluss-Motoren bewährt, die bei geringer Belastung eine sehr hohe Drehzahl entwickeln, die aber mit zunehmender Belastung stark absinkt. Dadurch ergibt sich ein drehzahlreicher Antrieb mit hohem Anzugsmoment, was besonders beim Antrieb von Fahrzeugen gewünscht ist. Vom Anlaufen aus dem Stand weg hat ein Reihenschluss-Motor und insbesondere ein Gleichstrom-Reihenschluss-Motor ein großes Drehmoment, was große Anfahrbeschleunigungen ermöglicht. Völlig ohne Last könnte sich die Drehzahl bis in sehr hohe Bereiche steigern. Eine Steuerelektronik begegnet dem vorteilhafterweise durch Reduzierung der Leistung, indem eine geringere Antriebsspannung an die Maschine angelegt wird.

Bei einem entsprechenden Schaltungsaufwand zur Ansteuerung der Wicklungen des Stators eines Asynchronmotors können ähnliche Eigenschaften erzeugt werden, wobei sich zusätzlich der Vorteil ergibt, dass kein Kollektor und keine Bürsten zum Antrieb des Rotors benötigt werden. Vielmehr ergibt sich ein einfach aufgebauter und robuster Kurzschlussläufer, der eine Betriebskennlinie aufweist, die derjenigen des Reihenschluss-Motors entspricht.

Als strukturelle Bauformen eines Elektromotors kommen ein Axialmotor mit Doppelspalt oder mit Einfachspalt in Betracht. Auch ein Radialmotor mit einem Innenläufer oder einem Außenläufer ist denkbar. Außenläufer haben dabei den Vorteil eines höheren Trägheitsmoments, was sich günstig auf die Laufruhe des damit ausgebildeten Antriebs auswirkt. Auch Kombinationen von Axialmotor und Radialmotor sind dabei denkbar, besonders wenn diese als Außenläufer ausgebildet sind.

Gemäß einer vorteilhaften Ausführungsform ist daher dermindestens eine Elektromotor als bürstenloser Außenläufermotor ausgebildet.

Dabei ist es vorteilhaft, den Motor derart zu dimensionieren, dass die maximale Geschwindigkeit des Mehrfachkinderwagens in etwa einer zügigen Schrittgeschwindigkeit von etwa 7km/h entspricht. Zweckmäßig ist für den Mehrfachkinderwagen ein Geschwindigkeitsbereich zwischen 0 und 7 km/h.

In einer Ausführungsform weist der mindestens eine Elektromotor einen Rekuperationsbetrieb auf, in dem beim langen Bergabfahren des Mehrfachkinderwagens elektrische Energie rückgewonnen und in einem Speicher gespeichert wird. Insbesondere wird die rückgewonnene elektrische Energie dazu genutzt, einen oder mehrere Akkumulatoren zu laden. Der Rekuperationsbetrieb ist nicht nur umweltschonend, sondern ermöglicht es auch, die wegen des hohen Gewichts von Akkumulatoren verhältnismäßig knappen Energiereserven zu schonen. Insbesondere bei Bergabfahrten lässt sich mit Hilfe des Rekuperationsbetriebes erheblich elektrische Energie rückgewinnen.

In einer Ausführungsform weist der Hilfsantrieb einen Freilauf auf.

Der Hilfsantrieb kann zur Verwirklichung passender Über- oder Untersetzungen ein Getriebe mit einer Eingangswelle und mit einer Ausgangswelle aufweisen, wobei vorzugsweise die Eingangswelle direkt mit dem Rotor eines in das Getriebeinnere konstruiertem Rotors eines Elektromotors verbunden ist.

In einer Ausführungsform weist das Getriebe ein Außenrad und ein konzentrisch zum Außenrad im Inneren des Außenrads angeordnetes Innenrad sowie ein sich zwischen Außenrad und Innenrad erstreckendes Zugmittel sowie wenigstens einen umlaufenden Transmitter auf, der das Zugmittel vom äußeren Umfang des Innenrads abhebt und an den inneren Umfang des Außenrads drückt. Das Zugmittel kann insbesondere als Rollenkette ausgebildet sein.

Ein weiteres geeignetes Getriebe ist als Kettengetriebe ausgebildet. Es weist drei Übersetzungsstufen auf, wobei die erste Übersetzungsstufe durch einen ersten Zahnkranz und einen vierten Zahnkranz, die zweite Übersetzungsstufe durch einen zweiten Zahnkranz und einen fünften Zahnkranz und die dritte Übersetzungsstufe durch einen dritten Zahnkranz und einen sechsten Zahnkranz gebildet ist. Der erste Zahnkranz, der zweite Zahnkranz und der dritte Zahnkranz sind auf einer ersten Welle angeordnet und der vierte Zahnkranz, der fünfte Zahnkranz und der sechste Zahnkranz sind auf einer zweiten Welle angeordnet. Zur Übertragung des Drehmoments ist in jeder Übersetzungsstufe eine Getriebekette vorgesehen. Die erste Welle ist als Abtriebswelle des Elektromotors ausgebildet.

Geeignete Untersetzungsverhältnisse, für die die Getriebe geeignet ausgebildet sein können, liegen zwischen 1:10 und 1:30. Bei derartigen Untersetzungsverhältnissen lassen sich bei typischen Dimensionierungen des Mehrfachkinderwagens Elektromotoren nutzen, die einen hohen Wirkungsgrad aufweisen.

Beispielsweise wird in jedem Hinterrad ein Nabenmotor eingesetzt mit einer Nennleistung von 200 W und einem Nenndrehmoment von ca. 0,9 Nm. 2400 Umdrehungen pro Minuten und eine Untersetzung von 1:20 liefern eine Frequenz von zwei Umdrehungen pro Sekunde am Rad, so dass sich bei einem typischen Raddurchmesser von 0,3 m eine für den Einsatzzweck passende Geschwindigkeit von ca. 7 km/h ergibt.

Vorteilhafterweise ist zumindest ein Betätigungsgriff mit einer Anzahl von dem Betätigungsgriff zugeordneten Sensoren vorgesehen, wobei mittels der Sensoren eine Betätigung des Betätigungsgriffes erfassbar ist. Die Ausgangssignale der Sensoren sind dabei einer Steuereinheit des mindestens einen Elektromotors zuführbar.

In einer ersten Ausführungsform ist am Betätigungsgriff eine erste Sensorgruppe angeordnet, wobei die Sensoren der ersten Sensorgruppe derart angeordnet und ausgebildet sind, dass sie in Fahrtrichtung und entgegen der Fahrtrichtung am Betätigungsgriff wirkende Kräfte, also ein Schieben oder Ziehen am Betätigungsgriff, erfassen.

Als Sensoren für die erste Sensorgruppe eignen sich verschiedene Arten von Kraftaufnehmern, insbesondere Dehnmessstreifen oder Piezo-Kraftaufnehmer.

Das Ausgangssignal der Sensoren wird in einem virtuellen räumlichen Koordinatensystem dargestellt so dass der Betätigungszustand der Sensoren einen Raumvektor im Volumen dieses Koordinatensystem beschreibt. Selbiger Raumvektor wird einem Mikrocontroller zugeführt um daraus die Steuerung der Hilfsantriebe, deren Rekuperation und deren Stillsetzung zu entscheiden.

Alternativ oder zusätzlich können die Sensoren der ersten Sensorgruppe derart ausgebildet und angeordnet sein, dass sie in einem Winkel zur Fahrtrichtung wirkende Kräfte, also eine Drehung des Betätigungsgriffs, die einen Richtungswechsel einleiten soll, erfassen.

In einer zweiten Sensorgruppe ist einer oder mehrere Berührungssensoren vorgesehen. Der oder die Berührungssensoren, die beispielsweise als kapazitive Sensoren und/oder als Widerstandssensoren ausgebildet sind, stellen eine Sicherheitsmaßnahme dar und werden eingesetzt um festzustellen, ob eine Betreuungsperson den Betätigungsgriff berührt. Wird keine Berührung festgestellt, sollte der Mehrfachkinderwagen stehen oder gestoppt, das heißt die Motoren stillgelegt werden. Hierfür ist eine Totmanneinrichtung vorgesehen, die durch eine Berührung des Betätigungsgriffs überbrückt wird.

In einer Ausführungsform weist der Mehrfachkinderwagen Sitzbereiche für mindestens vier Kinder auf, die vorzugsweise quer zur Fahrtrichtung des Mehrfachkinderwagens angeordnet sind.

Unter der Fahrtrichtung wird dabei die Richtung verstanden, in der der Mehrfachkinderwagen üblicherweise von einer Betreuungsperson bewegt wird. Unter quer zur Fahrtrichtung angeordneten Sitzbereichen werden Sitzbereiche verstanden, die derart ausgerichtet sind, dass die dort sitzenden Kinder quer zur Fahrtrichtung, also seitlich, sitzen.

Dabei sind in einer vorteilhaften Ausführungsform zwei Reihen von Sitzbereichen einander gegenüberliegend angeordnet, so dass die dort sitzenden Kinder einander ansehen und kommunizieren können. Zudem haben in dieser Position die Kinder auch Kontakt zur Betreuungsperson und können ihren Blick auch leicht in die Blickrichtung der Betreuungsperson wenden. Diese Ausführungsform eignet sich insbesondere für Mehrfachkinderwagen mit 4, 6, 8 oder sogar mehr Sitzbereichen. Sie hat den Vorteil, dass die Kinder miteinander und mit der Betreuungsperson leicht kommunizieren können.

In einer Ausführungsform weisen die Sitzbereiche zumindest teilweise Aufnahmevorrichtungen für Kleinkind-Kindersitze auf. Dabei können die Aufnahmevorrichtungen auch zur Aufnahme von Kinderautositzen, insbesondere auch Babyschalen, geeignet sein. Da die Sicherheitsanforderungen jedoch geringer als im Auto sind, können auch andere Kindersitze vorgesehen sein, die in ihrer Auslegung in Bezug auf eine Kopfstütze, auf die Sitzposition, auf die Größe des Sitzes und auf das zulässige Höchstgewicht an Kinder verschiedener Altersstufen angepasst sind.

Dabei kann die Sitzgelegenheit der Kinder in dem Wagen so gestaltet werden, dass die Sitze des Wagens eine Sitzgelegenheit für Kinder im Alter von 1,5 bis 5 Jahre mit einer Möglichkeit des Angurtens erlauben, aber zudem durch geeignete Formgebung auch eine Babysitzschale für Kinder im Alter von 0,2 ... 1,5 Jahre aufnehmen können.

Diese Ausführungsform erlaubt es, abhängig von Alter und Körpergröße der zu transportierenden Kinder stets genau passende Sitze auszuwählen. Dies ist insbesondere für Tagesmütter und -väter und Krippenpersonal vorteilhaft, wenn die Zusammensetzung der zu transportierenden Kindergruppe nicht altershomogen ist und sich darüber hinaus von Zeit zu Zeit ändert.

Dazu kann in dem Mehrfachkinderwagen ein Schienen- oder Kombisystem vorgesehen sein, auf dem die Kindersitze befestigt werden können. Denkbar ist dabei auch eine Sitzgestaltung die ein sicheres Integrieren einer Babyschale in den Sitz des Krippenkinderwagens erlaubt. Das Schienensystem hat den Vorteil, dass nicht nur die Art der aufzunehmenden Kindersitze, sondern auch ihre Anzahl und Anordnung in gewissen Grenzen variabel ist.

Der Mehrfachkinderwagen kann beispielsweise eine Kunststoff-Wanne aufweisen, in der die Sitze inklusive der kombinierten Aufnahmevorrichtungen angeordnet sind. Die Wanne kann, damit sie verletzungssicher ist, mit vornehmlich glatten ungefährlichen Flächen geformt werden, die zudem leicht zu reinigen sind. Es können im Boden der Wanne an der tiefsten Stelle größere Bohrungen mit einem Ablauf zum Boden eingebracht werden, um ein Reinigen mit fließendem Wasser zu ermöglichen. Wegen der hohen Beanspruchung sollte die Wanne robust und leicht sein und damit insbesondere aus Kunststoff ausgebildet sein.

Die Gebrauchseigenschaften des kombinierten Krippenkinderwagens können noch durch ins Gehäuse bzw. in die Wanne integrierte Leer- und Ablagefächer erweitert werden, welche vorzugsweise zur Ablage von Nahrung, Wechselwäsche und diverse wichtiger Kinderbetreuungsutensilien dienen können.

Um den Fahrkomfort zu erhöhen, kann die Wanne gefedert mit dem Fahrgestell verbunden sein, während Räder des Mehrfachkinderwagens ungefedert mit dem Fahrgestell verbunden sind.

Zudem können als zweckmäßige Ausstattung ein aufsteckbares Sonnendach und eine vor Wind und/oder Regen schützende, einhängbare Plane zur Abdeckung der Kniebereiche vorgesehen sein.

Für die Verwendung im Winter ist ein in die beschriebenen Sitzbereiche einlegbares stoffbezogenes Styroporformteil zweckmäßig, welches als "Eigenheiz-Kissen" funktioniert.

Ausführungsbeispiele der Erfindung werden im folgenden anhand der beigefügten Figuren näher erläutert.
- Figur 1: zeigt schematisch eine perspektivische Ansicht eines Mehrfachkinderwagens gemäß einer Ausführungsform der Erfindung;
- Figur 2: zeigt schematisch einen Querschnitt durch den Mehrfachkinderwagen gemäß Figur 1;
- Figur 3: zeigt schematisch einen Betätigungsgriff für den Mehrfachkinderwagen gemäß einer ersten Ausführungsform;
- Figur 4: zeigt schematisch eine Untersicht des Mehrfachkinderwagens gemäß Figur 1;
- Figur 5: zeigt schematisch einen Betätigungsgriff für den Mehrfachkinderwagen gemäß einer zweiten Ausführungsform;
- Figur 6: zeigt schematisch einen Schnitt durch ein Getriebe zur Verwendung mit dem Mehrfachkinderwagen gemäß Figur 1;
- Figur 7: zeigt schematisch eine Übersicht über mögliche Antriebskonzepte für den Mehrfachkinderwagen gemäß einer Ausführungsform der Erfindung;
- Figur 8: zeigt schematisch einen Notkuppelmechanismus für den Mehrfachkinderwagen gemäß einer Ausführungsform der Erfindung;
- Figur 9: zeigt schematisch einen Notkuppelmechanismus für den Mehrfachkinderwagen gemäß einer weiteren Ausführungsform der Erfindung;
- Figur 10: zeigt schematisch einen Notkuppelmechanismus für den Mehrfachkinderwagen gemäß einer weiteren Ausführungsform der Erfindung;
- Figur 11: zeigt schematisch einen Notkuppelmechanismus für den Mehrfachkinderwagen gemäß einer weiteren Ausführungsform der Erfindung;
- Figur 12: zeigt schematisch einen Notkuppelmechanismus für den Mehrfachkinderwagen gemäß einer weiteren Ausführungsform der Erfindung;
- Figur 13: zeigt schematisch einen Notkuppelmechanismus für den Mehrfachkinderwagen gemäß einer weiteren Ausführungsform der Erfindung;
- Figur 14: zeigt schematisch einen Notkuppelmechanismus für den Mehrfachkinderwagen gemäß einer weiteren Ausführungsform der Erfindung;
- Figur 15: zeigt schematisch einen Schiebegriff mit Sensoren gemäß einer Ausführungsform der Erfindung;
- Figur 16: zeigt schematisch einen Schiebegriff mit Sensoren gemäß einer weiteren Ausführungsform der Erfindung;
- Figur 17: zeigt schematisch einen Schiebegriff mit Sensoren gemäß einer weiteren Ausführungsform der Erfindung;
- Figur 18: zeigt schematisch eine elektronische Steuerung für einen Mehrfachkinderwagen gemäß einer Ausführungsform der Erfindung;
- Figur 19: zeigt schematisch eine dreidimensionale Ansicht eine Mehrfachkinderwagens gemäß einer Ausführungsform der Erfindung;
- Figur 20: zeigt schematisch weitere dreidimensionale Ansichten des Mehrfachkinderwagens gemäß einer Ausführungsform der Erfindung;
- Figur 21: zeigt schematisch einen Teil des Antriebsstrangs für den Mehrfachkinderwagen gemäß einer Ausführungsform der Erfindung;
- Figur 22: zeigt schematisch weitere Elemente des Antriebsstrangs für den Mehrfachkinderwagen gemäß einer Ausführungsform der Erfindung;
- Figur 23: zeigt schematisch im Querschnitt weitere Elemente des Antriebsstrangs für den Mehrfachkinderwagen gemäß einer Ausführungsform der Erfindung;
- Figur 24: zeigt schematisch weitere Elemente des Antriebsstrangs für den Mehrfachkinderwagen gemäß einer Ausführungsform der Erfindung;
- Figur 25: zeigt schematisch im Querschnitt weitere Elemente des Antriebsstrangs für den Mehrfachkinderwagen gemäß einer Ausführungsform der Erfindung;
- Figur 26: zeigt schematisch eine Halterung für einen Akkumulator für den Mehrfachkinderwagen gemäß einer Ausführungsform der Erfindung;
- Figur 27: zeigt schematisch eine Unteransicht des Mehrfachkinderwagens gemäß einer Ausführungsform der Erfindung und
- Figur 28: zeigt schematisch eine perspektivische Ansicht des Mehrfachkinderwagens gemäß einer Ausführungsform der Erfindung.
Gleiche Teile sind in allen Figuren mit denselben Bezugszeichen gekennzeichnet.

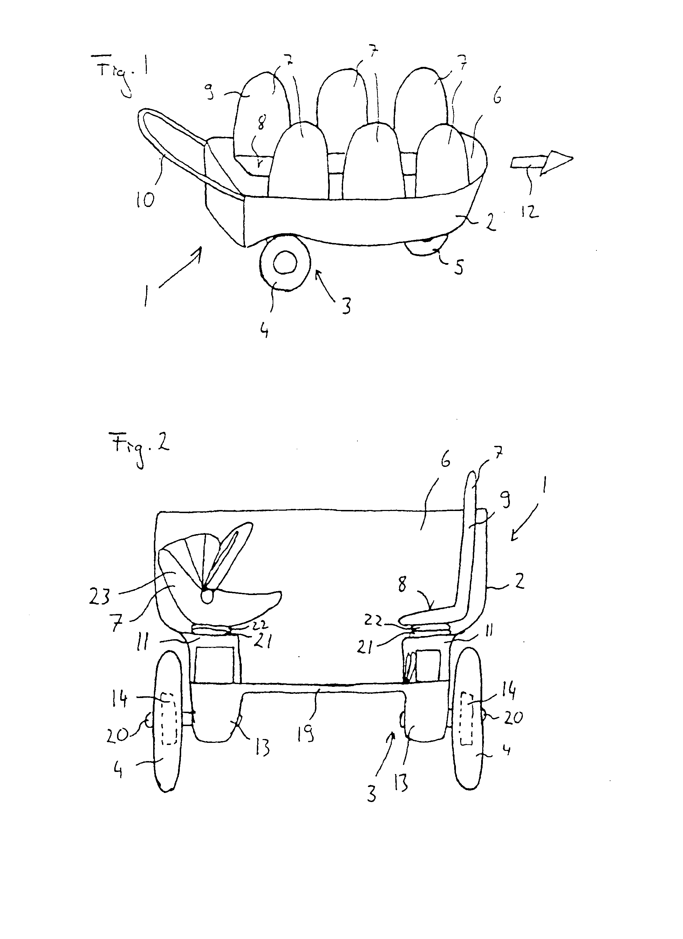

Figur 1 zeigt schematisch einen Mehrfachkinderwagen 1 gemäß einer Ausführungsform der Erfindung. Der Mehrfachkinderwagen 1 umfasst eine auf einem Fahrgestell 3 angeordnete Wanne 2 aus Kunststoff, in deren Innerem 6 Sitzbereiche für Kinder vorgesehen sind.

In den Sitzbereichen sind insgesamt sechs Kindersitze 7 mit einer Sitzfläche 8 und einer Rückenlehne 9 angeordnet, die einander in zwei Reihen quer zur durch den Pfeil 12 angedeuteten Fahrtrichtung gegenüberliegen. Die Kindersitze 7 können mit in Figur 1 nicht gezeigten Haltegurten zur Fixierung ausgestattet sein.

Der Mehrfachkinderwagen 1 weist zwei Hinterräder 4 und ein Vorderrad 5 auf, wobei das Vorderrad 5 als Schwenkrad ausgebildet ist und die Hinterräder 4 als feste Räder, so dass die Drehachse der Hinterräder 4 in Bezug auf das Fahrgestell 3 festliegt, während die Drehachse des Vorderrads 5 bei einem Richtungswechsel verschwenkt wird.

Die Hinterräder 4 des Mehrfachkinderwagens 1 werden durch je einen Elektromotor angetrieben, wie es in Figur 2 dargestellt ist.

Die Betätigung des Mehrfachkinderwagens 1 und insbesondere auch der Elektromotoren erfolgt durch den Betätigungsgriff 10.

Figur 2 zeigt schematisch einen Querschnitt durch den Mehrfachkinderwagen 1 gemäß Figur 1. Die beiden Hinterräder 4 sind mittels einer starren Aufhängung 13 an einer Bodenplatte 19 des Fahrgestells 3 gelagert. Sie weisen jeweils einen im Bereich ihrer Radnabe 20 angeordneten Nabenmotor oder Getriebemotor 14 auf.

Im Inneren 6 der Wanne 2 ist in den Sitzbereichen ein Kombisystem 21 verlegt, auf das Kindersitze 7 in den gewünschten Positionen aufgeschnappt oder einfach appliziert werden können. In Figur 2 ist rechts ein Kindersitz 7 mit einer8 und einer Rückenlehne 9 und links eine Babyschale 23 aufgeschnappt. Dazu weisen die Kindersitze 7 Gegenstücke 22 zum Kombisystem 21 auf, mittels derer sie mit dem Kombisystem 21 verbunden werden können.

In einer alternativen, nicht gezeigten Ausführungsform sind die Sitzbereiche als Bänke mit Sitzflächen und Rückenlehnen ausgeführt, wobei in den Sitzflächen, vorzugsweise in Vertiefungen, das Kombisystem verlegt ist. Darauf kann entweder eine Babyschale aufgeschnappt werden, oder es kann für ein größeres Kind ein Sitzkissen aufgelegt werden, das das Kombisystem abdeckt.

Unter den Sitzbereichen bzw. den Kindersitzen 7 sind Hohlräume 11 angeordnet, die beispielsweise als Stauraum dienen.

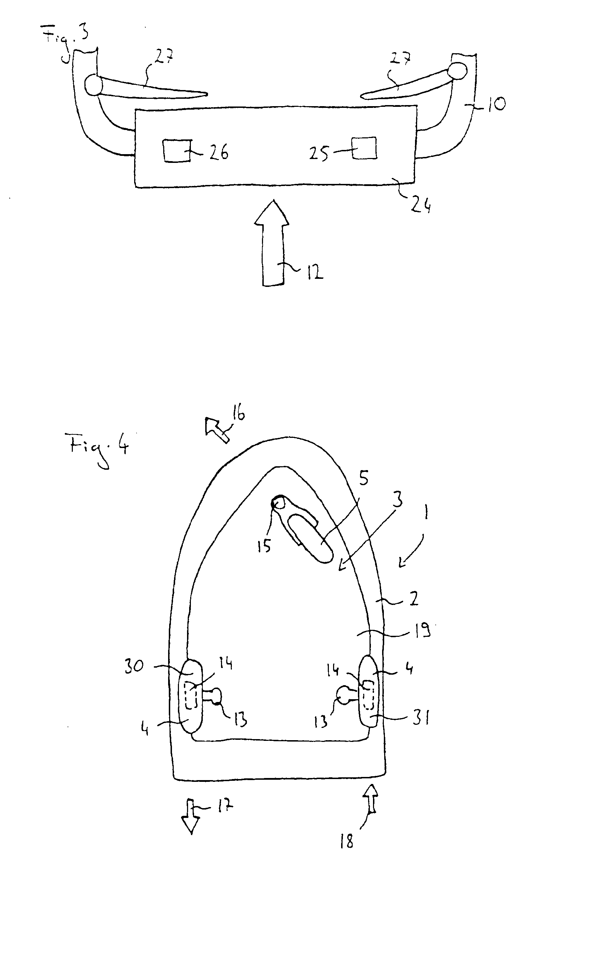

Figur 3 zeigt schematisch einen Betätigungsgriff 10 gemäß einer ersten Ausführungsform. Der Betätigungsgriff 10 weist eine zur Bedienperson gewandte Betätigungseinheit 24 mit zwei Sensoren 25, 26 auf. Das sensitive Erfassen der Schwenkbewegung (Schwenken des Wagens) ist in den wannenseitigen Halterungen des Betätigungsgriffes möglich und wird wie oben erwähnt als eine weitere Koordinate des Vektors dem Kontroller zugeführt.

Die Sensoren 25, 26 sind beispielsweise als Dehnmessstreifen oder als Piezo-Kraftaufnehmer ausgebildet und sensieren Druck- bzw. Zugkräfte in oder entgegen der durch den Pfeil 12 angedeuteten Fahrtrichtung des Mehrfachkinderwagens 1.

Werden Druckkräfte in Fahrtrichtung festgestellt, so kann darauf geschlossen werden, dass eine Betreuungsperson den Mehrfachkinderwagen 1 anschiebt, also eine Erhöhung der Fahrgeschwindigkeit wünscht. Werden dagegen Zugkräfte entgegen der Fahrtrichtung festgestellt, so kann auf ein Ziehen am Betätigungsgriff 10 und damit auf den Wunsch nach einer Verringerung der Fahrgeschwindigkeit geschlossen werden.

Aus der Differenz der an den Sensoren 25 und 26 ermittelten Kräfte kann auf den Wunsch nach einer Richtungsänderung geschlossen werden.

Die Sensoren werden von einer Steuereinheit, beispielsweise einem Mikrocontroller, ausgelesen, die die beiden Nabenmotoren entsprechend des festgestellten Wunsches nach Beschleunigung, Verringerung der Fahrgeschwindigkeit und/oder Richtungsänderung steuert.

Der Betätigungsgriff 10 weist ferner zwei Bremshebel 27 auf.

Figur 4 zeigt schematisch eine Untersicht des Mehrfachkinderwagens 1 gemäß Figur 1. In dieser Ansicht ist besonders gut erkennbar, dass die Hinterräder 4 mittels einer starren Aufhängung 13 an der Bodenplatte 19 des Fahrgestells 3 befestigt sind, während das Vorderrad 5 eine schwenkbare Aufhängung 15 aufweist.

In Figur 4 ist die Situation einer Fahrtrichtungsänderung gezeigt. Die Sensoren am Betätigungsgriff haben den Wunsch nach einer Fahrtrichtungsänderung festgestellt und das leicht bewegliche Vorderrad 5 schwenkt bereits in die durch den Pfeil 16 angedeutete neue Fahrtrichtung ein. Der Fahrtrichtungswechsel wird unter Zuhilfenahme der Nabenmotoren 14 in den beiden Hinterrädern 4 vollzogen:
Da die beiden Nabenmotoren 14 unabhängig voneinander sind und die beiden Hinterräder daher unabhängig voneinander antreibbar sind, kann ein Fahrtrichtungswechsel quasi auf der Stelle vollzogen werden. Das eine Hinterrad 30 wird dabei rückwärts angetrieben, wie es durch den Pfeil 17 angedeutet ist, während das andere Hinterrad 31 vorwärts wie durch den Pfeil 18 angedeutet angetrieben wird.

Auf diese Weise sind ein müheloser Richtungswechsel und ein sehr kleiner Wendekreis des Mehrfachkinderwagens 1 möglich.

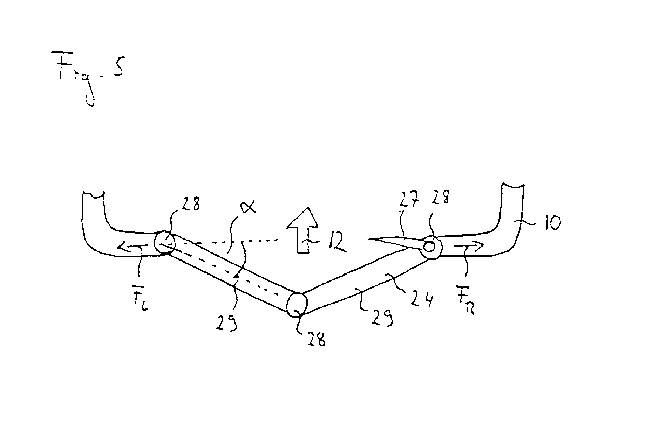

Figur 5 zeigt schematisch eine alternative Ausführungsform des Betätigungsgriffs 10 für den Mehrfachkinderwagen 1. Dieser Betätigungsgriff 10 weist zwei miteinander und mit dem Betätigungsgriff 10 über Gelenke 28 verbundene Betätigungsarme 29 auf. In Figur 5 nicht gezeigte Sensoren nehmen sowohl den Winkel α auf, um den ein Betätigungsarm 29 ausgelenkt ist, als auch die anliegenden Seitenkräfte F_{R}, F_{L}.

Falls der Winkel α gegen Null geht, wird von einem Wunsch nach Beschleunigung ausgegangen. Falls der Winkel α dagegen gegen 90 Grad geht, wird von einem Wunsch nach Verringerung der Fahrgeschwindigkeit ausgegangen.

Zudem werden die Seitenkräfte F_{R}, F_{L} ausgewertet, um den Wunsch nach Richtungsänderungen feststellen zu können. Sind die Seitenkräfte F_{R}, F_{L} gleich und/oder gleich Null, wird von einem Wunsch nach Geradeausfahrt ausgegangen. Sind die Seitenkräfte jedoch ungleich Null und insbesondere auch unterschiedlich, wird von einem Wunsch nach einer Richtungsänderung ausgegangen und die Nabenmotoren entsprechend unterschiedlich angesteuert nach dem Prinzip des Active Yaw oder Torque Vectoring.

Auch in der zweiten Ausführungsform weist der Betätigungsgriff 10 zumindest einen Bremshebel 27 auf. Zum Bremsen werden vorteilhafterweise die beiden Nabenmotoren 14, beispielsweise im Rekuperationsbetrieb, eingesetzt. Erst in einem hinteren Bereich der Betätigung des Hebels wird die Bremsung durch Scheibenbremsen übernommen.

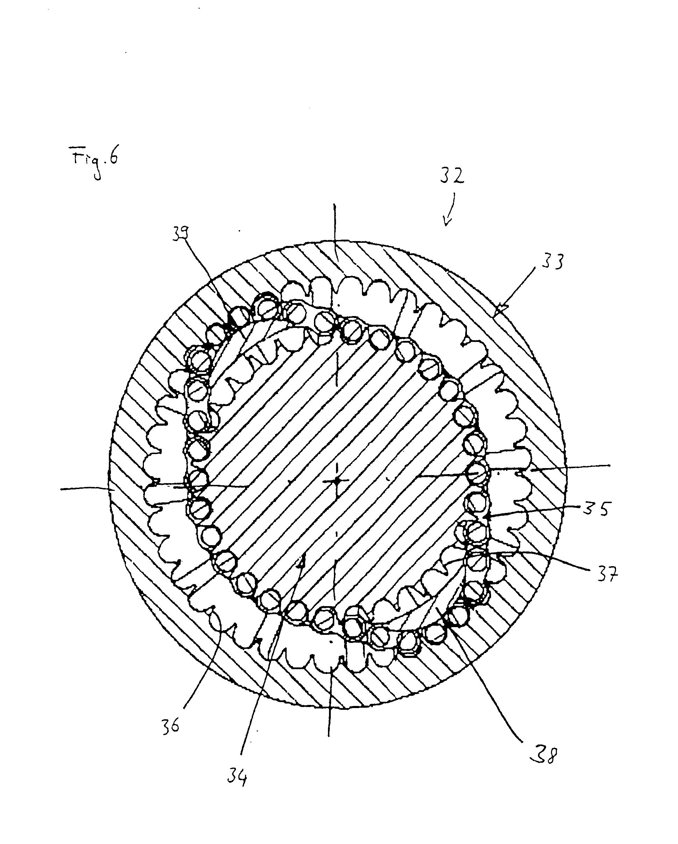

Figur 6 zeigt schematisch einen Schnitt durch ein Getriebe 32, das sich zur Verwendung im Mehrfachkinderwagen 1 eignet und das sich mit einem Nabenmotor 14 zu einer Motorgetriebeeinheit zusammenfassen lässt.

Das Getriebe 32 gliedert sich in ein topförmiges Gehäuse 33, in ein Innenrad 34, das hier einstückig an einer drehbar im Gehäuse 33 gelagerten Ausgangswelle vorgesehen ist, sowie in eine Rollenkette 35, die von einem im Gehäuse 33 drehbar gelagerten, in Figur 6 nicht gezeigten Transmitterträger zwischen dem Gehäuse 33 und dem Innenrad 34 geführt wird.

Das Gehäuse 33 weist innenseitig eine radial nach innen gerichtete Außenradverzahnung 36 auf, während das Innenrad 34 eine radial nach außen gerichtete Innenradverzahnung 37 aufweist. Die Rollenkette 35 greift formschlüssig sowohl in die Außenradverzahnung 36 als auch in die Innenradverzahnung 37 ein.

Der jeweils zwischen Außenradverzahnung 36 und Innenradverzahnung 37 angeordnete und mit dem Transmitterträger umlaufend rotierende erste Transmitter 38 bzw. zweite Transmitter 39 rakelt jeweils einen Teilbereich der Rollenkette 35 in die Außenradverzahnung 36, wobei die Rollenkette 35 vom ersten Transmitter 38 bzw. vom zweiten Transmitter 39 von der Innenradverzahnung 37 abgehoben wird.

Dabei werden Glieder der Rollenkette 35 nacheinander umfangsmäßig in die Außenradverzahnung 36 gedrückt. Das in Umlaufrichtung des Transmitterträgers nachfolgende Kettentrum zieht dabei das Innenrad 34 nach. Durch den unterschiedlichen Radius der Außenradverzahnung 36 und der Innenradverzahnung 37 ergibt sich ein vorbestimmtes Übersetzungsverhältnis. Zur Erzielung eines bestimmten Übersetzungsverhältnisses können auch mehrere Kettenreihen vorgesehen sein.

Im Folgenden werden mögliche Ausführungsformen des Mehrfachkinderwagens bzw. seiner einzelnen Elemente, die untereinander in der beschriebenen Weise kombiniert werden können, diskutiert.

Als Kindersitze können bereits am Markt verfügbare Kindersitze wie Autokindersitze, Babyschalen, Babywippen oder Teile von Kinderhochstühlen verwendet werden, wobei ein geringes Gewicht, ausreichende Stabilität und eine technisch einfache Möglichkeit zur Anbringung einer Verbindung mit dem Mehrfachkinderwagen vorteilhaft sind.

An Babyschalen und Sitzverkleinerer für Fahrradanhänger bzw. Joggingwägen etc. werden geringere Sicherheitsanforderungen bezüglich Stabilität gestellt als an Autokindersitze. Daher können die Schalen leichter und Platz sparender konstruiert werden. Dies ist für einen Mehrfachkinderwagen vorteilhaft, da der zur Verfügung stehende Raum sehr begrenzt ist. Es sind Babyschalen verfügbar, die sehr leicht - ca. 600 g -, kompakt (Abmaße LxB 70 cm x 30 cm) und für Kinder im Alter bis 12 Monaten geeignet sind. Eine geeignete Sitzeinlage für Kleinkinder von ca. drei bis 12 Monaten ist pflegeleicht und bietet durch eine weiche Polsterung und ein Dreipunktgurtsystem seitlichen Halt. Eine weitere Babyschale ist für Kinder bis neun Monaten geeignet und aus hochwertigem EPP-Schaummaterial gefertigt. Sie wird in Kinderfahrradanhängern mit einem Gurtspannsystem befestigt. Die Schale ist mit einer Baumwollauflage gepolstert und besitzt ein Gurtsystem.

Als Getriebe für den Mehrfachkinderwagen werden im folgenden zwei verschiedene Ausführungsformen für kleine elektrische Antriebe diskutiert, ein Kettengetriebe, Dual Direct Drive (DDD) Motor, und ein Taumelradgetriebe, Harmonic Chain Drive (HCD) Motor wie bereits anhand von Figur 6 erläutert. Diese können jeweils mit einer bürstenlosen Synchronmaschine (BLDC) angetrieben werden.

Der elektrische Antrieb ist vorteilhafterweise darauf auszulegen, die Betreuungsperson im Handling zu unterstützen, d.h. das Gefährt auf ebenen Wegen ohne Kraftanstrengung fortzubewegen, Unebenheiten leichter zu überwinden und ein wendiges Benutzen in engen Räumen sicherzustellen. Als Elektromotor kann beispielsweise ein Brushless Direct Current Motor (BLDC) der Firma Compact Power Motors GmbH (CPM) eingesetzt werden. Die bürstenlose permanenterregte Synchronmaschine ist robust und hat folgende Kenndaten:

| | | | | |
|---|---|---|---|---|
| Maximale Drehzahl | | | 4000 rpm | |
| Maximales Drehmoment | | | | 4 Nm |
| Versorgungsspannung | | | 48 V | |
| Leistung | 1200 Watt | | | |
| Wirkungsgrad | | 90 % | | |

Drehzahl und Drehmoment für einzelne Betriebspunkte:
Bei einer Drehzahl von ca. 2000 min-1 und einer Leistung von 0,85 kW steht ein Drehmoment von etwa 4 Nm zur Verfügung. Der Wirkungsgrad beträgt 78 %.

Mögliche Getriebetypen:
Der betrachtete Kettenmotor (DDD) hat folgende Kenndaten und
Maße:

| | | | | | |
|---|---|---|---|---|---|
| Übersetzung | | | 1:38 | | |
| Maximales | Drehmoment | | | | 152 Nm |
| Maximale Drehzahl | | | | 105 min-1 | |
| LxBxH | 119 mm x 338 mm x 176,70 mm | | | | |
| Gewicht | | 6200 g | | | |
| Systemwirkungsgrad | ca. 78 % | | | | |

Erfüllt IP 65-Schutzklasse

Das Abtriebsritzel des DDD-Motors wird über ein dreistufiges Kettengetriebe angetrieben.

Der betrachtete HCD-Motor besitzt folgende Kenndaten und Maße:

| | | | | |
|---|---|---|---|---|
| Übersetzung | | 1:38 | | |
| Maximales Drehmoment | | | | 152 Nm |
| Maximale Drehzahl | | | 105 min-1 | |
| Durchmesser | | 170 mm | | |
| Breite | 120 mm | | | |
| Erfüllt IP 65-Schutzklasse | | | | |

Bei dem HCD-Außenläufermotor wird der Innenring mit Außenverzahnung über einen E-Motor angetrieben. Ein elastisches, gelenkiges Element, wie eine Kette, wird mittels eines elliptischen Kettenspanners gespannt und greift in die Innenverzahnung des Außenrings ein. Der innere Zahnkranz dreht sich mit der Drehzahl des Motors, während sich über die elliptisch eingreifende Kette die Außenverzahnung nur um einen Zahn weiterschiebt. Durch seine zylindrische Form bietet sich der Einsatz als Radnabenmotor an.

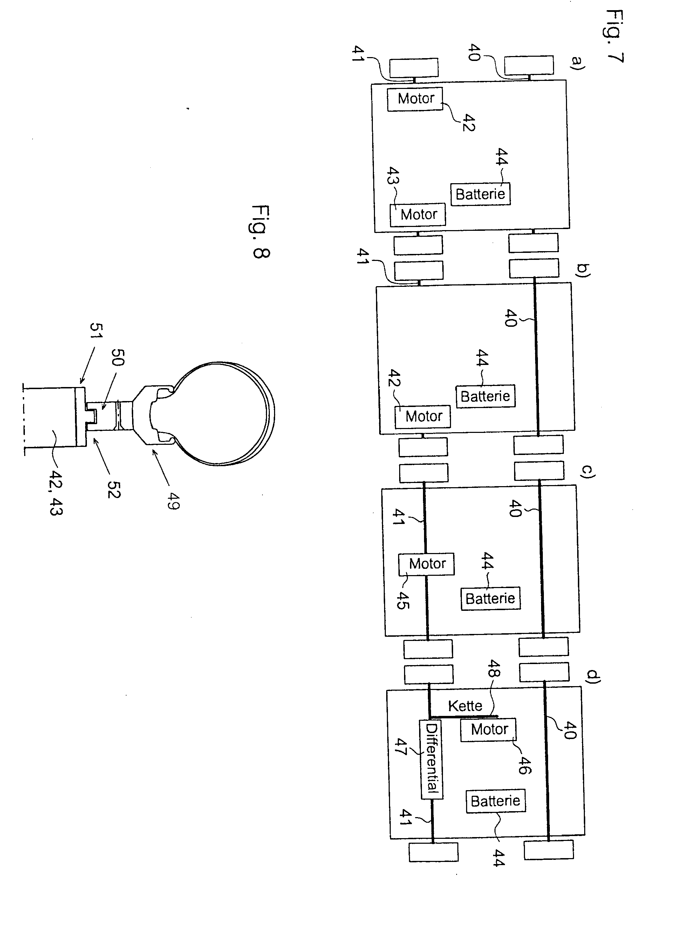

Es werden im Folgenden verschiedene Antriebskonzepte für den Mehrfachkinderwagen diskutiert, wie in Figur 7 übersichtshalber gezeigt.

Jeder Antrieb kann für die Vorderachse 40 und Hinterachse 41 konstruiert werden. Bei der Motorisierung der Hinterräder ist der zu beschreibende Radius bei einer Kurvenfahrt oder beim Rangieren wesentlich geringer als bei einem Vorderradantrieb. An die nicht angetriebene Achse können 360° Lenkräder oder ein Lenksystem montiert werden. Über einen Griff und die Lenkstange wird das Lenktrapez an den Vorderrädern angesprochen.

Bei der in Figur 7 a gezeigten Ausführungsform wird der Mehrfachkinderwagen durch zwei Radnabenmotoren 42, 43 an der Hinterachse 41 angetrieben. Die Motoren 42, 43 können mittels eines weiter unten erläuterten Sensorgriffs unabhängig voneinander angesprochen werden und somit unterschiedliche Raddrehzahlen liefern. Dadurch kann unter anderem das Wenden auf der Stelle ermöglicht werden. Der Vorteil von Radnabenmotoren besteht darin, dass der Antrieb in den Rädern integriert ist und somit kein Stauraum verloren geht.

Bei der in Figur 7b gezeigten Ausführungsform wird der Mehrfachkinderwagen durch lediglich einen Radnabenmotor 42 an einem Rad angetrieben. Beim Antreiben der rechten Hinterradnabe erhält der Wagen einen Linksdrall, den die Begleitung kontinuierlich ausgleichen muss.

Der in Figur 7c und d gezeigte Zentralantrieb kann in den beiden Varianten mit DDD- und HCD-Motor ausgeführt werden.

Der DDD-Motor 45 gemäß Figur 7c mit bereits integriertem Differential treibt die Hinterachse 41 an. Die Abtriebswelle des Motors wird kongruent zur Antriebswelle der Räder angebunden. Dies ergibt eine kostengünstige und einfach zu integrierende Variante.

Beim Einsatz eines normalen DDD-Motors 46 oder eines HCD-Motors, wie in Figur 7d dargestellt, wird zusätzlich ein Differential 47 zwischen Motor 46 und Antriebsachse 41 geschaltet. Das sich auf dem Differential 47 befindliche Ritzel wird über eine Kette 48 angetrieben.

Kleinere, auf den Leistungsbedarf angepasste zylindrische Motoren mit einer geringeren Getriebeübersetzung und integriertem Freilauf in beide Richtungen können in Räder mit einem geringeren Durchmesser, wie bei Kinderwägen, modernen Kindertransportsystemen und Transportwägen für den Schiebebetrieb, eingesetzt werden.

Ein Differential gleicht den Drehzahlunterschied zwischen zwei über eine Achse angetriebene Räder aus. Das Antriebsmoment vom Motor wird gleichmäßig auf die beiden Antriebswellen verteilt. Auf gerader Stecke und bei optimalem Bodenkontakt der angetriebenen Räder werden die Antriebsachsen der Räder über den Differentialkorb angetrieben. Besitzen jedoch die beiden Räder eine unterschiedliche Drehzahl, dreht sich das im Differential integrierte Ausgleichsrad zusätzlich um seine eigene Achse und gleicht die Drehzahlen der Räder aus. Dieses Prinzip kann Verwendung beim Mehrfachkinderwagen mit Zentralantrieb finden. Durch gezieltes Bremsen z. B. des rechten Rades wird die Drehzahl verringert. Durch das Ansprechen des Differentials dreht sich das linke Rad um diesen Wert schneller. Somit wird der Wendekreis geringer und ein Lenken ohne Kraftaufwand möglich.

Fallen bei einem elektrisch unterstützten Gefährt Motor oder Akku aus, ist nicht nur der Kinderwagen mit seinem Eigengewicht und dem Gewicht der Kinder zu schieben, zusätzlich fungiert der Motor als Generator. Das bedeutet, dass sich das Prinzip der Umwandlung von elektrischer Energie aus der Batterie in mechanische Energie, also Drehmoment, auf die Räder umkehrt. Die Bedienungsperson muss gegen den Motorwiderstand anschieben. Um dies zu verhindern, ist es vorteilhaft, eine Entkopplungsmöglichkeit vorzusehen.

Da im Falle des Einsatzes von zwei Radnabenmotoren mit kapazitivem Sensorgriff der Wagen elektrisch unterstützt vorwärts- wie rückwärts fahren soll, kann die Antriebswelle vollständig von den Rädern zu entkoppelt werden.

Hierfür ist, wie in Figur 8 gezeigt, eine manuelle Trennung von Felge und Motor 42, 43 vorgesehen. Eine zweiteilige Felge 49 läuft dabei auf einem beispielsweise als Messing- oder Kunststofflager ausgebildeten Lager 50. Die mittige Rippe der Abtriebshülse 51 dient zur axialen Fixierung. Bei Bedarf wird ein Verbindungselement 52, beispielsweise ein Bolzen oder Stift, aus der Verbindungsöse Felge-Motorabtrieb gezogen und die Felge radial freigegeben.

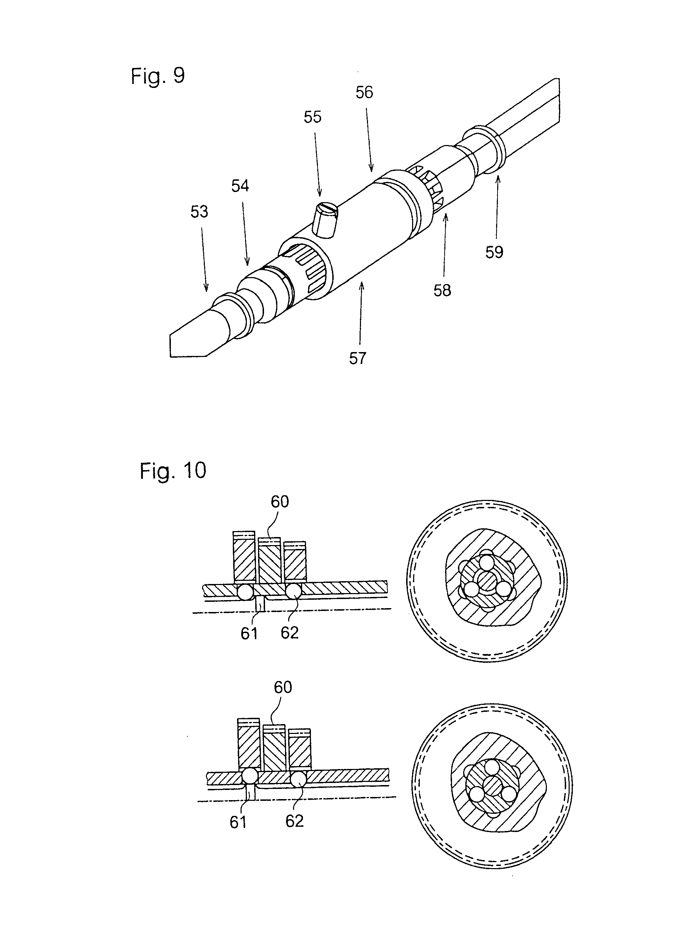

Die in Figur 9 gezeigte Muffen- oder Hülsenkupplung ist eine einfache und somit kostengünstige Fertigungsart, zwei Wellen lösbar zu verbinden. Zwei stumpf zueinander ragende Wellen haben an ihren Enden ein Keilwellenprofil. Eine Muffe mit Keilnabenprofil stellt eine verdrehsichere Verbindung zwischen diesen beiden Wellen her. In die Nut der Muffe 56 greifen zwei Stifte der Spreizklaue. Die Muffe wird durch den Schalthebel, der am Fahrzeugträger gelenkig gelagert ist, längs der Welle verschoben und löst die Keilwellenverbindung. Ein Feder-Klemmelement 55 arretiert die gekoppelte oder entkoppelte Stellung 54, indem sie in die entsprechende Nut einrastet.

Eine weitere Möglichkeit ist, die Nabe von der Antriebswelle zu trennen. Dabei läuft die Radnabe auf einem Lager, um im entkoppelten Zustand die rotatorische Relativbewegung zu ermöglichen. Über einen Flansch wird mittels Arretierung die Nabe mit der Antriebswelle verbunden oder von ihr getrennt. Der Vorteil einer Entkopplung der Welle-Nabe-Verbindung liegt in der geringeren Komponentenzahl und der einfacheren Ausführung. Die Entkopplungsmöglichkeit sollte für den Bediener gut zugänglich sein. Nachfolgend werden Arretierungsmöglichkeiten vorgestellt.

Figur 10 zeigt eine Ziehkeilkupplung in Leerlaufstellung (Figur 10a) und in Kuppelstellung (Figur 10b). In die integrierten Löcher einer Hohlwelle werden Kugeln eingesetzt. In die Hohlwelle wird der Ziehkeil 61 mit einem Bund eingeführt. Dieser Ziehkeil 61 schiebt bei Betätigung, d. h. bei Positionierung des erhöhten Wellenabschnitts unter einer Schaltkugel 62, die Schaltkugeln 62 nach außen. Auf der Hohlwelle sitzt die Nabe mit zylindrischen Nuten und es wird über die Kugeln 62 ein Formschluss erreicht.

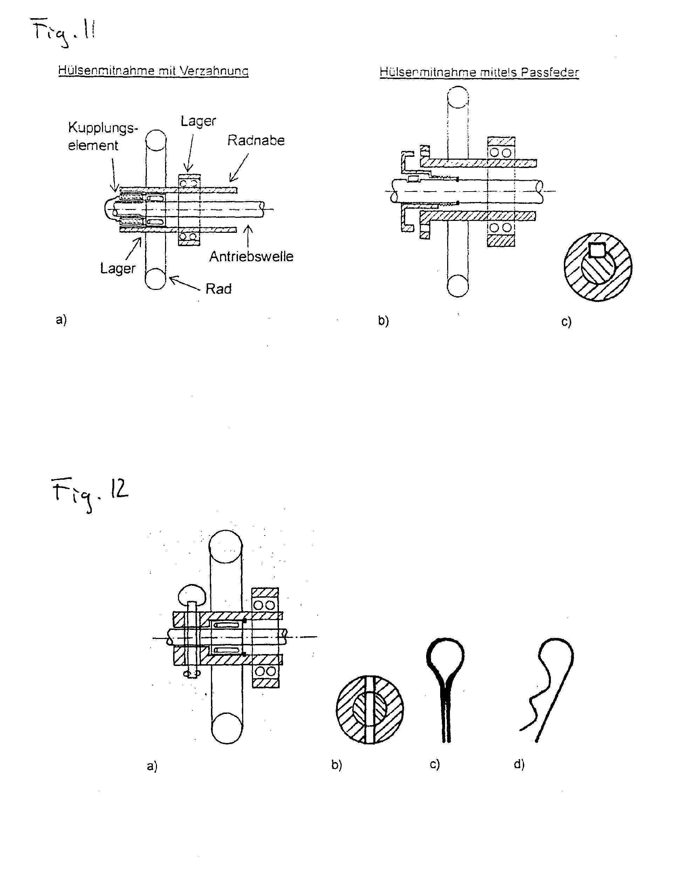

Bei der in Figur 11 gezeigten verschiebbaren Hülse mit Verzahnung sitzt eine Hülse mit Innen- und Außenverzahnung auf der Antriebswelle und nimmt im eingekuppelten Zustand die Nabe mit. Bei der Mitnahme mittels Passfeder wird ein Flansch mit zwei Bolzen axial auf der Welle verschoben. Dadurch greifen die Bolzen in die Bohrungen der Radnabe ein. Alternativ kann der Flansch ebenfalls mit Bohrungen versehen werden. Im eingekuppelten Zustand werden Flansch und Nabe mit Bolzen verdrehsicher verbunden, wie in Figur 11b und c dargestellt. Für die axiale Sicherung dient beide Male eine Feder.

Ein einfacherer Aufbau sind die in Figur 12 gezeigten Stiftverbindungen, die in eine nach der Außenseite verlängerte Radnabe mit Querbohrung greifen. Über Kugelsperrbolzen oder Splinte wird die Radnabe mit der Antriebswelle verkeilt. Die Figur 12c) und d) zeigt einen normalen und einen Sicherungssplint.

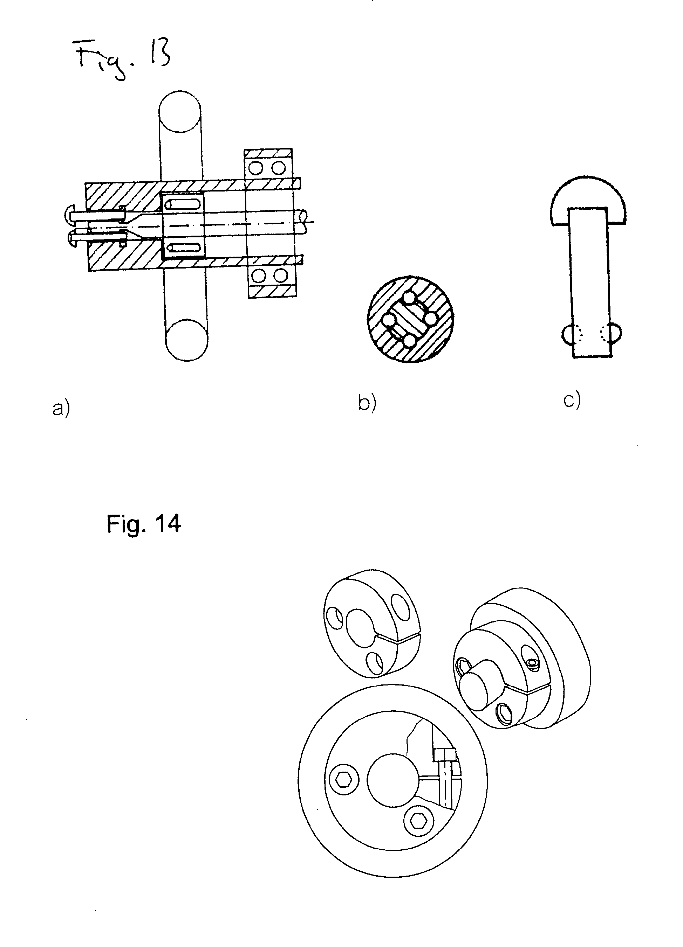

Figur 13 zeigt eine Variante mit Kugelsperrbolzen. Die Bolzen können auch axial zwischen Welle und Nabe eingelegt werden, wie in den Figuren 13 a und b gezeigt. Über die zylindrischen Auflageflächen entsteht, ähnlich wie bei der Passfeder, ein Formschluss. Durch den Kugelsperrbolzen ist ein ungewolltes Lösen der Verbindung nicht möglich. Erst beim Anziehen am Haken löst sich die Spannung der Kugeln und der Bolzen lässt sich entfernen, wie in Figur 13c gezeigt. Es ist auch möglich, das Verbindungsstück zwischen Welle und Nabe auf einem Quer- oder Kegelpressverband anzubringen. Besteht die Gefahr, dass die Antriebswelle durch Querbohrungen oder Einkerbungen, durch Passfedernuten oder das Einführen von Bolzen mechanisch überlastet wird, kann auf die Welle ein Quer- oder Kegelpressverband montiert werden. Der Pressverband ist mit der Antriebswelle über Reibschluss fest verbunden und hat seinerseits eine lösbare Verbindung zur Nabe.

Figur 14 zeigt eine Variante mit Klemmverbindungen. Klemmverbindungen basieren auf dem Prinzip des Reibschlusses. Die seitlich an die Nabe angebrachten Klemmringe umschließen die Welle. Über das Anziehen der Schraube wird die nötige Flächenpressung zur Übertragung des Drehmoments aufgebracht. Wird die Verbindung gelöst, läuft die Nabe auf einer Messingbuchse.

Die aufgeführten Kupplungsarten ermöglichen ein vollständiges Entkoppeln von Motor und Rädern, was bei Ausfall des Motors ein leichtes Vorwärts- und Rückwärtsschieben ermöglicht. Dies sind jedoch relativ aufwändige Ausführungen. Eine andere Lösung ist der Einsatz eines Freilaufs, da ein manuelles Entkoppeln entfällt. Handelsübliche Freiläufe für beide Fahrtrichtungen sind aber relativ kostenintensiv. Es kann daher auch auf das elektrische Rückwärtsfahren verzichtet und ein kostengünstiges Ratschen-Modell eingesetzt werden.

Für den elektrisch unterstützten Mehrfachkinderwagen werden im Folgenden Ansteuermöglichkeiten für die Radnabenmotoren oder den Zentralmotor diskutiert.

Als Steuerungsmöglichkeiten für die Elektromotoren kommen beispielsweise kapazitive und piezoelektrische Sensoren sowie Dehnmessstreifen oder Daumengas in Betracht.

Eine innovative Ansteuerart sind kapazitive Sensoren. Die beiden Radnabenmotoren können einzeln angesprochen werden, um abweichende Motordrehzahlen und -momente der beiden Räder und somit ein leichtes Leiten und Führen des Wagens zu erzielen. Dies kann durch einen Griff realisiert werden, der die Handbewegung der Bedienperson aufnimmt und als Sensorsignal verarbeitet. Um den Wagen zu beschleunigen, wird auf die Vorderseite des Griffs mehr Druck aufgebracht. Zum Bremsen wird der Griff gezogen und somit auf die Rückseite des Griffs mehr Druck ausgeübt. Bei einem Richtungswechsel wird die eine Seite des Griffs gezogen, die andere gedrückt.

Um diese intuitiven Reaktionen der Person zu erfassen, können beispielsweise vier Elektroden in den Griff integriert werden. Für die linke und rechte Hand befindet sich je eine Elektrode auf der Vorderseite des Griffs und eine auf der Rückseite. Diese Elektroden verändern durch Berührung, auch unterschiedlich starke, ihre Kapazität, wobei diese von der Auflagefläche der Hand abhängig ist. Diese Eigenschaft wird durch die zugehörige Elektronik verarbeitet. Vier analoge Signale werden entweder als einzelne Werte ausgegeben oder direkt voneinander subtrahiert, zeitlich erfasst und mittels eines Mikrocontrollers an die Motoren weitergegeben.

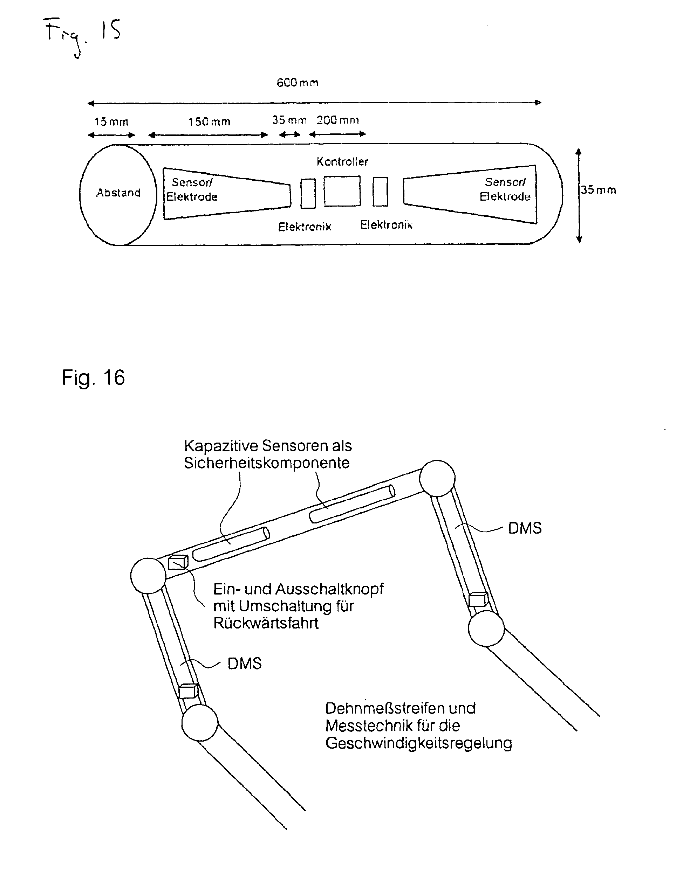

Eine Ausführungsform des Sensorgriffs ist mit beispielhafter Bemaßung in Figur 15 gezeigt.

Der Griff beinhaltet vier kapazitive Sensoren, die dazugehörige Elektronik, einen Mikrocontroller sowie die abgestimmte Software für eine sichere und komfortable Bedienung. Der seitliche Abstand zum Griffende ermöglicht die Integration kleiner LED-Leuchten. Durch die Position der Hände an den zur Mitte sich verjüngenden Elektroden kann zusätzlich eine Geschwindigkeitsregulierung vorgenommen werden. Alle Funktionen des Wagens werden durch die Programmierung realisiert.

In einer Ausführungsform werden dabei einige oder alle der folgenden Prinzipien umgesetzt:
1. Der Wagen fährt nur vorwärts, wenn beide Hände die Elektroden an der Vorderseite ansprechen.
2. Der Wagen fährt nur rückwärts, wenn beide Hände die Sensoren an der Rückseite ansprechen.
3. Der Wagen wechselt die Richtung nach rechts, wenn die rechte hintere und die linke vordere Elektrode gedrückt werden. Umgekehrt für die Linkskurve.
4. Der Wagen wendet auf der Stelle, wenn nur eine vordere linke oder vordere rechte Elektrode angesprochen wird.
5. Wenn die Person aufgrund einer Gefahr den Griff fest umschließt, werden trotz einer überwiegenden Komponente Motor und Räder abgebremst.
6. Wird der Griff nicht zweihändig durch eine Person gehalten, bleibt der Wagen stehen.

Folgendes Sicherheitssystem kann dabei vollständig oder teilweise eingehalten werden:
1. Die Weitergabe der Signale an die Motoren wird durch die Programmierung überwacht.
2. Durch Berücksichtigung einer zeitlichen Änderung der Signale wird verhindert, dass die nicht exakte Positionierung der Hände eine ungleiche Signalausgabe zur Folge hat.
3. Nur eine ausreichende Kapazitätsänderung hat auch Einfluss auf die Steuerung und die Motoren.
4. Durch die Differenzbildung kann bei vordefinierten Kombinationen der Handbewegung ein festgesetzter Ausgabewert an die Motoren gesendet werden.
5. Zusätzlicher Ein-/Aus-Sensortaster sowie ein Taster für z.B. drei unterschiedliche Geschwindigkeitsstufen.
6. Aktivieren der Energieversorgung durch eine Schlüsseleinrichtung.

Eine besonders kostengünstige Lösung mit einem geringen Steuerungs- und Regelungsaufwand sind Dehnmessstreifen (DMS) zur Drehmomentermittlung. Die linear arbeitenden Dehnmessstreifen werden auf den Griffholm geklebt. Die Technologie ist ausgereift und erfordert keinen zusätzlichen Entwicklungsaufwand. Die nachgeschaltete Messtechnik und die Programmierung ermöglichen eine lineare Geschwindigkeitsregelung des Wagens. Eine Variante des Griffs mit Dehnmessstreifen ist in Figur 16 gezeigt.

Der elektrische Widerstand R eines Drahtes wird bestimmt durch seinen Durchmesser und seine Länge. Vier Dehnmessstreifen - je zwei an der oberen und zwei an der unteren Griffoberfläche - werden an eine zug- und druckbeanspruchte Längsseite am Griff geklebt. Bei Drücken gegen den Griff wird der DMS gezogen oder gestaucht, was eine Änderung der Drahtform zur Folge hat. Ein Verstärker ermittelt die Änderung des Widerstands R und leitet die Signale an den Maincontroller weiter.

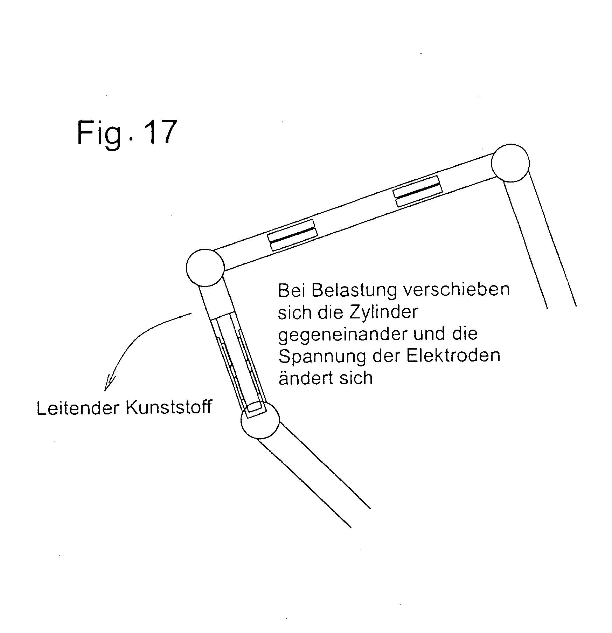

Eine Variante des Griffs mit einem piezoelektrischen Messsystem ist in Figur 17 gezeigt. Bei einem piezoelektrischen Messsystem entstehen bei Krafteinwirkung Ladungsunterschiede, die zur Auswertung an einen Ladungsverstärker weitergeleitet werden. Allerdings ist diese Methode vor allem für dynamische Vorgänge geeignet. Eine Modifikation sind eingesetzte Kunststoffzylinder. Bei der Rotation des Griffs verschieben sich die in den Griff integrierten Zylinder gegeneinander und bewirken eine Ladungsverschiebung. Diese wird ebenfalls über einen Ladungsverstärker an den Maincontroller weitergeleitet und steuert die Drehzahl der Motoren.

Eine weitere, besonders einfache und kostengünstige Lösung stellt ein Daumengas dar mit linearer Geschwindigkeitsregelung, das auf dem Prinzip eines Potentiometers oder HallSensors beruht. Es kann zusätzlich mittels des kapazitiven Sensorgriffs eine Sicherheitseinrichtung, wie auch in Figur 16 gezeigt, integriert werden, d. h. die Sensoren sollen lediglich prüfen, ob sich beide Hände der Betreuungsperson am Griff befinden.

Dem Griff kommt eine wichtige Funktion zu. Er soll den Bediener ansprechen, ihn an etwas Gewohntes erinnern, somit die Hemmschwelle gegenüber etwas Neuem verringern und zugleich technische Aspekte vereinen. Es ist auf ausreichend Raum für die technischen Einbauten, die für die elektrische Unterstützung und Sicherheit nötig sind, zu achten. Ansteuerungsmöglichkeiten der Motoren, wie Kontaktelektroden, Drehmomentsensor oder ein Daumengas sowie zwei Bremshebel und eine Klingel können Verwendung finden können. Der Griff kann höhenverstellbar sein und die Steuermöglichkeit gut erreichbar installiert werden. Schlicht gehalten, vermeidet er unnötige Komplexität.

Der Markt bietet u.a. dreh- und höhenverstellbare Einzelgriffe, höhenverstellbare Schiebegriffe oder Teleskopschieber und T-förmige Griffe, wie sie bei Bollerwagen verwendet werden. Dem Benutzer wird mit dem Schiebegriff eine von Kinderwägen, Joggingwägen oder Einkaufswägen vertraute Form geboten. Der Schiebegriff gibt Sicherheit beim Führen des Wagens und ist für das Anbringen der Steuerungsmöglichkeiten vorteilhaft. Mit einem Durchmesser von ca. 22 mm können ein handelsübliches Daumengas und zwei Bremshebel montiert werden.

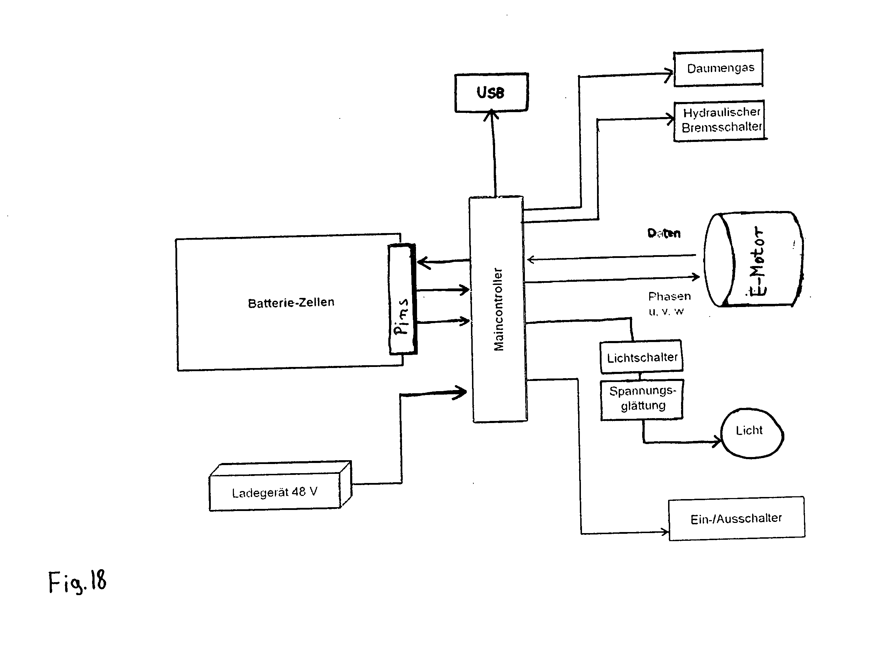

Figur 18 zeigt eine mögliche Variante für eine elektronische Schaltung des Mehrfachkinderwagens. Die als Batterien geeigneten Li-Ionen-Zellen sind für ihre hohe Ladezyklenfestigkeit und den ausgesprochen sicheren Betrieb bekannt. Das Akku-Gehäuse ist wasserdicht und stabil. Der Akku wird in den Mehrfachkinderwagen entweder fest integriert oder zum Laden entnommen.

Die Ansteuerung erfolgt nach den bereits aufgezeigten Möglichkeiten. Die Ansteuerung wird mittels Maincontroller verarbeitet und an die Motoren weitergeleitet. Der verwendete Maincontroller wird über einen an den Mehrfachkinderwagen angepassten Kabelbaum mit der Batterie, dem Motor und der Ansteuerung verbunden und fungiert als zentrale Komponente, wie in Figur 18 gezeigt.

Die Drehzahl des Motors kann über eine Drehzahlbegrenzung, einen Geschwindigkeitssensor oder Drehmomentregler gesteuert werden. Die beiden letzteren bringen einen zusätzlichen Hardware- und Softwareaufwand mit sich. Es kann ungünstig sein, das Drehmoment zu begrenzen, da kurzzeitig beim Überfahren von Hindernissen ein sehr hohes Drehmoment vorteihaft ist, bei ebenen Wegen jedoch der Wagen zu schnell fahren würde. Der Einfachheit halber kann die Drehzahl begrenzt werden.

Geeignet sind grundsätzlich Hartgummi-, Vollgummi- und Luftreifen sowie Stahl-, Aluminium oder leichte Kunststofffelgen. Schmale Räder gewährleisten eine mühelose Lenkung. Es können 360°-Lenkräder verwendet werden, die mit einer Fahrradgabel für 12-Zoll-Räder und einem Steuersatz mit Gewinde aufgenommen werden.

Bei Verwendung von Radnabenmotoren wird der HCD-Motor mit einem Durchmesser von ca. 170 mm wird in eine Abtriebshülse eingesetzt, die, wie oben erläutert, mit der Fahrradfelge verbunden ist. Es kann ein gängiger Ballonreifen aufgezogen werden.

Bei Verwendung eines Zentralmotors kann die Antriebsachse z. B. mit einem Kegelspannsatz an die Nabe montiert werden. Dazu wird die Radnabe mit einem Kegelsitz ausgeführt. In die Welle wird ein Gewinde geschnitten. Das Spannelement auf der Antriebswelle erreicht beim Anziehen der Schraube die nötige Flächenpressung im Bereich des Kegelsitzes, um das Drehmoment zu übertragen.

Neben technischen Funktionen sind praktische Maßnahmen vorgesehen. Ein ansprechendes Design, nützliche Ablagefächer, rutschfester Boden sowie Regen- und Sonnenschutz sind wünschenswert. Ältere Kinder können sich an dem seitlich befestigten Handlauf festhalten. Ein Tisch in der Mitte des Wagens kann zu Pausenzeiten zwischen dem Spielen einladen. Ein Vorteil der mitgeführten Energiequelle ist die Möglichkeit, den Krippenwagen StVO-konform mit Licht und Hupe auszustatten und LED-Leuchtstreifen zu installieren. Zur Unterhaltung der Kinder könnte eine kleine Musikanlage angeschlossen werden.

Ein wichtiger praktischer Aspekt ist auch die Gestaltung einer Einstiegsöffnung für die Kinder. Diese kann insbesondere an derjenigen Seite des Mehrfachkinderwagens vorgesehen sein, an der auch der Betätigungsgriff angebracht ist. Hierzu kann der Betätigungsgriff wegklappbar ausgebildet sein. Dies hat den Vorteil, dass die Kinder zum Aussteigen an der im Bereich des Betätigungsgriffs sich aufhaltenden Betreuungsperson vorbei müssen und beaufsichtigt werden. Ein Ausstieg während der Fahrt kann dadurch vermieden werden. Insbesondere kann als zusätzliche Sicherung vorgesehen sein, dass ein Wegklappen des Betätigungsgriffs zur Freigabe des Einstiegs eine Bremse des Mehrfachkinderwagens betätigt.

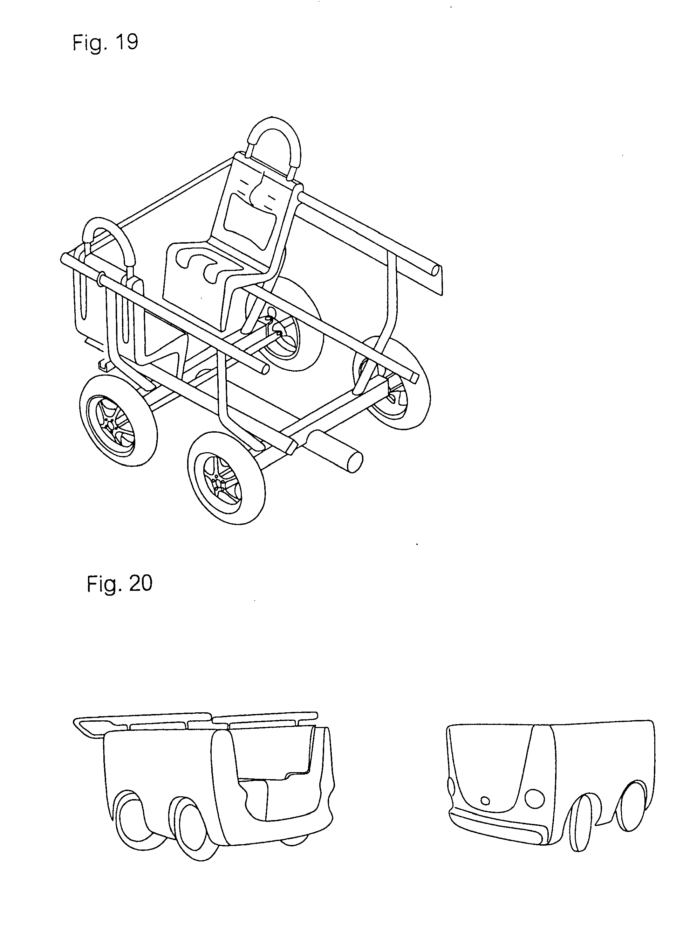

Gemäß einer in den Figuren 19 und 20 gezeigten Ausführungsform weist der Mehrfachkinderwagen die Maße BxLxH 880 mm x 1200 mm x 1500 mm auf und hat ein Gewicht von etwa 27 kg.

Das Chassis ist aus einer Aluminium-Legierung AlMgSi 0,5 hergestellt. Auf ein mittiges, längs angebrachtes Rohrprofil mit 34 mm Durchmesser stützen sich zwei quer montierte Vierkant-Hohlträger. An diesen sind über einen Bolzen und zwei Lager die Räder mit Kunststofffelgen aus PA 6.6 GV15, einem zu 15% glasfaserverstärkten Polyamid-Typ, und Luftbereifung befestigt. An beiden Enden des Wagens stützen sich jeweils links und rechts gebogene Rohre auf die Vierkant-Hohlträger und leiten das Gewicht der Kinder ein. Die Hinterräder sind fest mit dem Chassis verbunden, während die Vorderräder mittels einer Lenkstange einen Lenkwinkel von 42° besitzen.

Ausstattung: sechs einzelne Sitzschalen mit Dreipunktgurtsicherung, Kunststoffsitze mit Schaumstoffauflage, können in eine leichte Liegeposition gebracht werden, Adaptionsmöglichkeit einer Babyschale, mechanische Scheiben- und Feststellbremsen, höhenverstellbarer Schiebegriff.

Der Krippenwagen kann mit einer Kunststofffront vollständig verkleidet werden.

Im Folgenden werden drei Varianten für den Mehrfachkinderwagen ausführlicher diskutiert. Die Erfindung bezieht sich auch auf die Antriebseinheiten, die den Elektromotor, das Getriebe und den Entkoppelungsmechanismus des Motors von den Rädern umfassen, wie sie bestimmten Kombinationen im Folgenden beschrieben werden, und auf die Verwendung dieser Antriebseinheiten bei Kleinfahrzeugen, insbesondere bei Kleinfahrzeugen mit einer manuellen Betätigung durch Schieben und/oder Ziehen.

### Variante 1: Zwei Radnabenmotoren mit HCD

Es wird zunächst der Einsatz von zwei Radnabenmotoren diskutiert. Die identischen HCD-Motoren erhalten durch eine kapazitive Steuerung ein Höchstmaß an Bedienerfreundlichkeit.

Der Antrieb des Krippenwagens wird als Hinterradantrieb mit zwei HCD-Motoren ausgeführt. Diese befinden sich in einer Abtriebshülse, welche durch Bolzen verdrehsicher mit der Radnabe verbunden ist. Die Motor-Felgen-Verbindung kann, wie weiter oben beschrieben, gelöst werden. Die Luftreifen werden auf eine zweiteilige Felge aufgezogen. Die Ansteuerung erfolgt über Sensoren im Schiebegriff. Die natürliche Lenkbewegung und Druckintensität der Anwender wird durch kapazitive Sensoren am Griff erfasst und der Wagen bis zu einer Höchstgeschwindigkeit von 6 km/h beschleunigt. Die Motoren werden dazu mit einer Drehzahlbegrenzung ausgestattet.

Bei dieser Variante ist der Mehrfachkinderwagen durch die Verwendung unabhängig voneinander steuerbarer Motoren sehr wendig und mühelos zu führen und zu lenken. Die Verwendung von zwei Motoren bringt jedoch auch höhere Kosten mit sich.

Ist keine On-Board-Stromversorgung vorhanden, ist eine Möglichkeit zur Entkoppelung des Motors von den Rädern vorteilhaft. Herkömmliche Kupplungen können bei Radnabenmotoren nicht gut eingesetzt werden. Zum Trennen von Motor und Felge kann die in Figur 8 dargestellte und auf die Anforderungen abgestimmte Konstruktion verwendet werden.

Dieser Entkopplungsmechanismus ist an der Außenseite des Rades leicht zugänglich und es sind nur wenige Bauteile nötig. Dadurch ist der Mechanismus kostengünstig. Aufgrund der großen Lager kann sich jedoch möglicherweise ein großer Schiebewiderstand ergeben, zudem kann der Entkopplungsmechanismus durch Schmutzanhaftungen klemmen.

Die Radnabenmotoren werden in dieser Ausführungsform starr mit dem Chassis verbunden und mit 12-Zoll Luftreifen bestückt. Die auftretenden Kräfte werden über die Reifen und Verstrebungen ins Fahrwerk geleitet. Der lange Hebelarm der Griffkonstruktion ist zusätzlich zur Anbindung am Motorbett über Verstrebungen abzustützen, um die auftretenden Momente abzufangen. Die Vorderräder sind 360°-Lenkräder und mit einer Radgabel am Krippenwagen befestigt. Sie werden aus Sicherheitsgründen vollständig von der Verkleidung des Krippenwagens verdeckt.

Hieraus ergeben sich wenig zusätzliche Bauteile aufgrund des Einsatzes von Radnabenmotoren, eine besonders große Wendigkeit und eine leichte Lenkbarkeit durch Einsatz von 360°-Lenkrädern. Zudem ist elektrisch unterstütztes Vorwärts- und Rückwärtsfahren möglich. Die 360°-Lenkräder benötigen jedoch auch relativ viel Platz unter der Verkleidung.

Ein ausreichender Radabstand sorgt für die Kippsicherheit des Wagens. Der lange Hebelarm kann umgangen werden, indem an der Oberkante des Wagens ein kurzer Schiebegriff - ähnlich einem Joggingwagen - angebracht wird. An der Hinterachse wird, um das Neigen des Wagens zu vereinfachen und so Bordsteine und Unebenheiten leichter zu erklimmen, eine Fußstange befestigt.

### Variante 2: Ein HCD-Motor oder DDD-Motor

Dieses Konzept kann entweder mit einem Radnabenmotor oder durch Antrieb einer Radnabe mittels Zentralmotor ausgeführt werden. Über ein Daumengas wird lediglich ein Hinterrad des Krippenwagens mit einem HCD- oder DDD-Motor angetrieben.

Der Radnabenmotor wird wie in Variante 1 ausgeführt. Bei dem DDD-Motor treibt der Kettenantrieb vom Motor direkt ein an der Nabe angebrachtes Ritzel an. Der Motor kann entweder wie bei Variante 1 mit einem Sensorgriff oder mit einem einfachen Gasgriff oder Daumengas angesteuert werden. Das Daumengas steigert kontinuierlich die Geschwindigkeit entsprechend dem Bediendruck.

Vorteilhaft an dieser Variante ist die kostengünstige Ansteuerungsart, der geringe Programmierungsaufwand der Ansteuerung und die Kostenreduzierung durch Verwendung nur eines Motors. Zudem hat die Verwendung eines Daumengases den Vorteil, dass diese technische Lösung in der Praxis bereits vielfach eingesetzt und bewährt ist.

Der Radnabenmotor wird wie Variante 1 mittels Bolzen von der Felge entkoppelt und läuft auf einer Kunststoffbuchse. Wird zum Beispiel auf elektrisch unterstützte Rückwärtsfahren verzichtet, kann eine Freilaufnabe eingesetzt werden. Bei der Verwendung eines DDD-Motors wird dieser in einer Kettenlinie zur Freilaufnabe moniert.

Dies bringt eine angenehme Handhabung mit sich und ist kostengünstig. Zudem ist der Mehrfachkinderwagen bei Bedarf auch ohne elektrische Unterstützung nutzbar. Auf ein elektrisch unterstütztes Rückwärtsfahren wird dabei allerdings verzichtet, der Wagen ist rückwärts gegen den Motorwiderstand zu ziehen.

Das Antriebsrad ist bei der Variante 2 fest mit dem Chassis verbunden. Die Vorderräder sind durch ein Lenktrapez verbunden. Die Lenkstange wird durch den Wagen zur Betreuungsperson geführt.

Die Lenkstange ermöglicht dabei ein definiertes Leiten des Wagens ohne vermehrten Kraftaufwand. Allerdings driftet der einseitig angetriebene Wagen fortdauernd ab, so dass der Einsatz einer Zwangslenkung vorteilhaft sein kann.

### Variante 3: HCD-Motor oder DDD-Motor mit Differential

Ein Zentralmotor, z.B. DDD- oder HCD-Motor, treibt über eine Kette das Differential an.

Motor und Differential sind bei dieser Variante in einer Ebene zueinander verbaut. Über eine Kette wird das auf dem Differential befestigte Kettenrad angetrieben. Das Differential gibt das Drehmoment des Motors zu gleichen Teilen an die Räder ab. Die Ansteuerung erfolgt über ein im Griff integriertes System mit Dehnmessstreifen. Die Geschwindigkeit wird durch die Druckintensität der Bedienperson und damit der linearen Änderung des Widerstands der DMS ermittelt.

Bei dieser Variante kann die ausgereifte Technologie der Dehnmessstreifen genutzt werden. Es wird nur ein Motor benötigt und der Steuerungs- und Regelungsaufwand ist verhältnismäßig gering. Bei bereits bestehenden Mehrfachkinderwägen kann allerdings das geringe Platzangebot zum Integrieren des Zentralmotors nachteilig sein.

Zusätzlich kann ein kapazitiver Sensor in den Griff integriert werden. Er fungiert lediglich als Kontrollmechanismus, ob die Bedienperson den Wagen beidseitig hält oder loslässt und spricht ein Sicherheitssystem an. Er übernimmt keine Steuerung der Motoren.

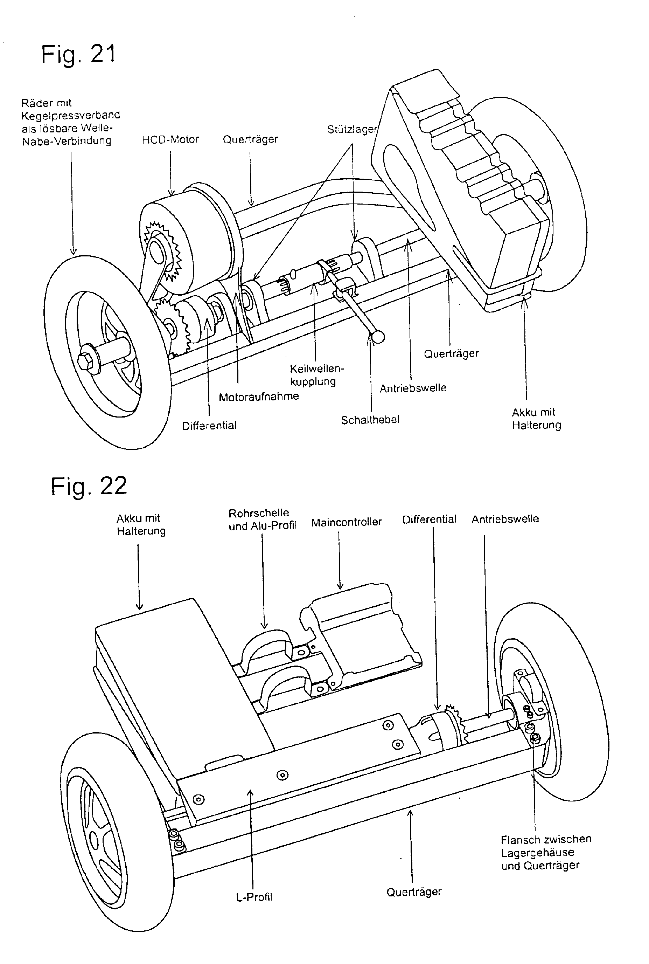

Ist der elektrische Antrieb unterbrochen, wird zum Entkoppeln des Motors mit einem Schalthebel die Keilverzahnung durch eine verschiebbare Muffe gelöst, wie in Figur 21 gezeigt. Es kann auch ein Trennen der Welle-Nabe-Verbindung wie oben erläutert erfolgen.

Die Verwendung einer Hülsenkupplung hat den Vorteil, dass die Keilwellenkupplung ein komplettes Trennen des Motors von den Rädern und ein leichtes Vorwärts- und Rückwärtsschieben ermöglicht. Zudem ist eine Nutzung des Mehrfachkinderwagens auch ohne elektrische Unterstützung möglich.

Die Verwendung einer Welle-Nabe-Verbindung hat den Vorteil, dass sie Platz sparend und unauffällig zu montieren ist, keine zusätzliche Lagerung benötigt und insgesamt eine geringe Anzahl an Bauteilkomponenten aufweist. Die ist zudem leicht in bereits bestehende Mehrfachkinderwagen zu integrieren.

Bei der Welle-Nabe-Verbindung ist auf das Design, eine einfache Handhabung und sicheren Betrieb im entkoppelten Zustand zu achten, da seitlich aus der Radnabe ragende Verbindungselemente als drehende Teile ein Sicherheitsrisiko für die am Wagen mitlaufenden Kinder darstellen.

Die Räder werden direkt am Chassis befestigt und über die Antriebsachse beschleunigt. Der Wagen ist über eine ungeteilte angetriebene Achse nur mit viel Krafteinsatz zu lenken, daher wird ein Differential zwischen Motor und Antriebsachse der Räder geschaltet.

Durch zwei Bremsen an den Rädern können die Drehzahlen einfach beeinflusst werden, wobei der Wagen um das verzögerte Rad lenkt. Durch den Antrieb einer Achse mit Differential ergibt sich eine stabilere Fahrweise des Wagens, das Differential gleicht Drehzahlunterschiede aus, woraus sich ein müheloses Lenken des Wagens ergibt.

### Integration in ein bestehendes Konzept

Zur Integration eines elektrischen Antriebs mit möglichst wenig Umbauten in ein bereits bestehendes Konzept eines Mehrfachkinderwagens werden in einer Ausführungsform ein DDD-Motor und ein Differential mit Freilauf eingesetzt. Die Ansteuerung des Motors erfolgt mittels Daumengas. Der Akku, der Maincontroller und der Motor werden unter der Sitzfläche verstaut.

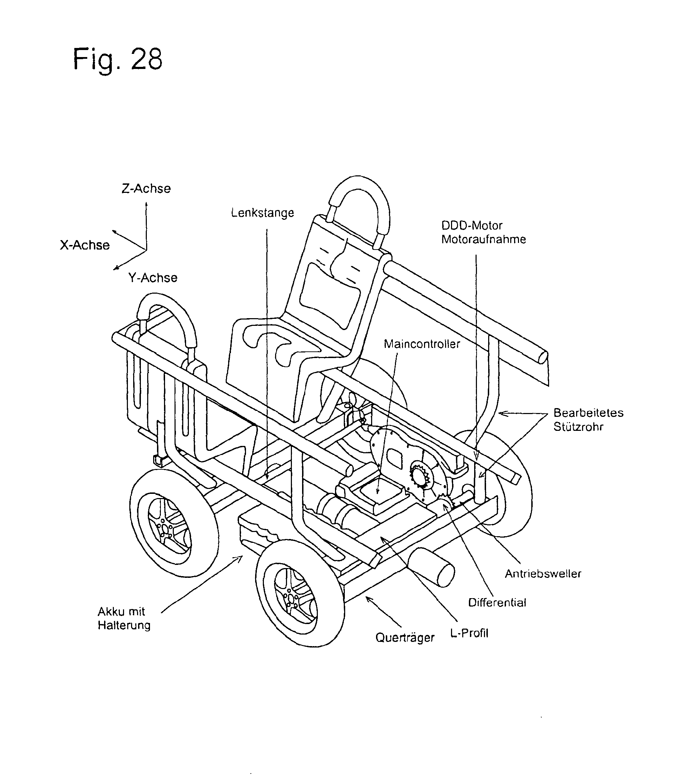

Da der DDD-Motor bereits erfolgreich in Kleinserien eingesetzt wird und somit als kostengünstiger Motor zur Verfügung steht, wird ein DDD-Motor mit Differential verwendet. Der DDD-Motor wird auf der rechten Seite zwischen Rad und Fußraum am Längsträger der neigbaren Sitze befestigt. Eine neu konstruierte Motoraufnahme wird am Aluminiumträger angeschweißt und mit dem Gussgehäuse des Motors verschraubt, wie in Figur 28 dargestellt.

Der für den Prototyp zur Verfügung gestellte Motor ist schwer im vorhandenen Raum zu integrieren. Der Motor ist nah an der Antriebsachse anzubringen und mit der Motoraufnahme nach oben zu montieren, da er andernfalls mit dem rechten Vorderrad kollidiert und den angestrebten Lenkwinkel von 42° nicht zulässt, wie in Figur 28 gezeigt. Die Axialposition des Motors ist durch das Differential festgelegt. Da das Differential mit dem Kettenrad aufgrund der Lagerung weit im Wageninneren sitzt, würde der Motor, da dieser mit dem Kettenrad in einer Ebene liegt, in den Fußraum ragen. Der Motor wird deshalb 180° um die Lenksachse gedreht und grenzt mit dem Differential an den rechten Fußraum.

Am Griffrohr mit 22 mm Durchmesser werden Bedienelemente zum Führen des Mehrfachkinderwagens angebracht. Es werden das Daumengas zur Geschwindigkeitsregelung, je ein Bremshebel für das linke und rechte Rad, eine Anzeige für den Batteriestand sowie eine Geschwindigkeitsanzeige integriert.

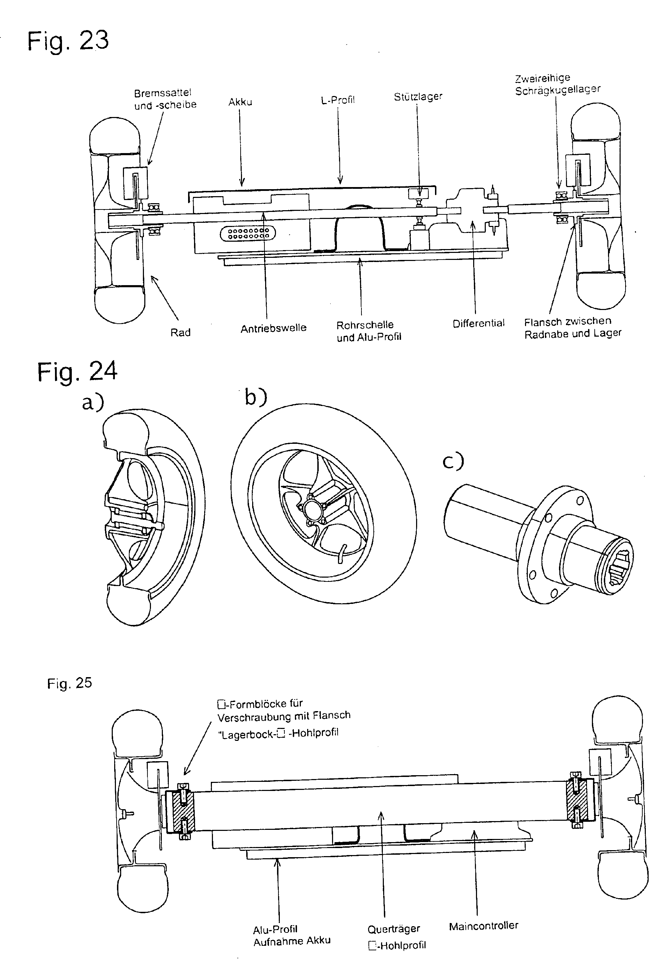

Die Lenkbarkeit wird mit Unterstützung des Differentials und zwei Scheibenbremsen erreicht wie in Figur 22 gezeigt. Es kann ein Differential der Firma Samagaga vom Typ DG72N-JT verwendet werden. Die dazugehörige Achse UN-AXLE mit passender Verzahnung zum Differential kann mittels einer Wellenkupplung und einer zweiten Welle mit Keilwellenprofil verlängert werden. Dieses wird zur Drehmomentübertragung in das Keilnabenprofil des Flansches geschoben wie in Figur 23 gezeigt. Es wird ein Freilauf auf dem Differential befestigt. Das Differential wird so eingebaut, dass der Freilauf in Vorwärtsrichtung sperrt, d. h. der auf dem Differential befindliche Freilauf befindet sich rechts neben dem Differentialkörper, um in Fahrtrichtung zu sperren und ein Antreiben zu ermöglichen. Das Differential ist nach außen kräfte- und momentenneutral und nicht fähig, äußere Kräfte oder Momente abzufangen. Die Abstützung erfolgt über ein zweireihiges Schrägkugellager und eine Stehlagergehäuseeinheit.

Es wird ein 1/2 x 1/8 Zoll-Freilaufritzel mittels Gewinde direkt auf das Differential geschraubt. Das Freilaufritzel besitzt 18 Zähne und wird von der Motorkette angetrieben. Dies ist eine sehr eloquente und Platz sparende Konstruktion, um ein müheloses Schieben ohne Motorunterstützung zu ermöglichen.

Die eingesetzten Lager und Bolzen in den Radnaben werden entfernt und durch einen Flansch ersetzt. Dies ist in Figur 24a bis c gezeigt. Der Flansch wird zusammen mit der Bremsscheibe an den Kunststoffrädern verschraubt, wie in Figur 24b gezeigt ist. Dieser Flansch dient zur Aufnahme der Radaufstandskräfte sowie der Lagerungsmöglichkeit.

Als Lagerung dienen zweireihige Schrägkugellager in O-Anordnung. Diese Lager eignen sich besonders für die Aufnahme von hohen Radial- sowie beidseitig auftretenden Axialkräften bei kleinem Bauraum. Der Druckwinkel von 25° teilt die Radialkraft in eine Radial- und Axialkomponente auf. Die größere Kugelzahl im Vergleich zu Radialrillenkugellagern gestattet ebenfalls höhere Belastungen. Durch die O-Anordnung ergibt sich ein breiterer virtueller Lagerabstand. Die auftretenden Kräfte werden jeweils um den Lagerabstand "a" verschobenen Weg eingeleitet. Dies begünstigt die Einleitung der Kräfte am Rad. Um eine Festlagerung zu realisieren und somit die vom Wagen ausgehenden Kräfte und Momente abzufangen, werden Innenring und Außenring fixiert, wie in Figur 23 gezeigt ist. Über die Lagerung und den Vierkant-Hohlträger werden die Kräfte und Momente aufgenommen. Da der Querträger aus Aluminium, die Blechanbindung und das Lagergehäuse allerdings aus Stahl sind, wird ein Aluminiumblock in das Hohlprofil eingesetzt und mit dem Flansch verschraubt wie in Figur 25 dargestellt.

Es wird ein hydraulischer Bremssattel vorgesehen und mit einem Adapter am Lagergehäuse befestigt. Um die Kräfte des linken, vertikalen, gebogenen Rohres abzustützen (siehe Figur 28) und das Stützlager sowie die Laschen des Akku-Halters anbinden zu können, wird ein Aluminiumwinkel mit den Maßen HxBxL 40 x 80 x 370 mm und einer Stärke von 6 mm an den Querträger angeschweißt. Da sich das Differential aufgrund der Platzprobleme des Motors weit im Wageninnern befindet, wird das L-Profil kürzer ausgeführt und das rechte Rohr gesondert abgestützt, wie in Figur 28 gezeigt. An der rechten Seite wird das gebogene, vertikale Rohr entfernt und durch zwei einzelne Rohrstücke ersetzt. Der obere Rohrabschnitt mit einer Biegung von 55° wird am Längsbalken aufgenommen. Der untere Rohrabschnitt stabilisiert die Verbindung zwischen Quer-und Längsträger (siehe Figur 28).

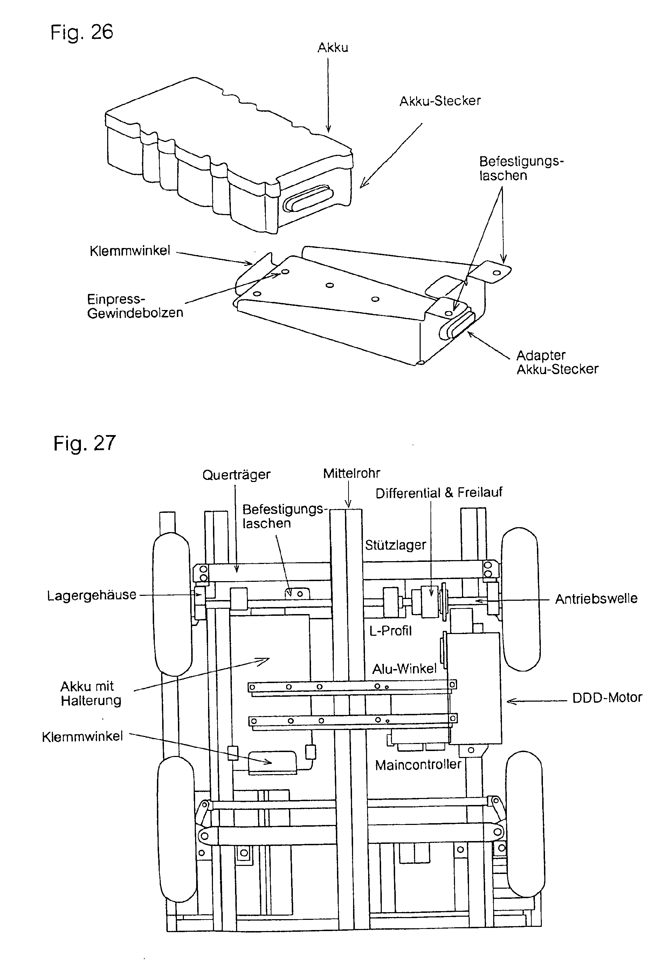

Es wird ein bestehender Akku mit integrierter Lademanagement-Funktion verwendet. Der Akku wird längs in den Halter geschoben. Das Stahlblech des Halters wird mit einer Distanzplatte verstärkt, um ausreichend Wandstärke für den Adapter des Akku-Steckers zu erhalten. An den Befestigungslaschen werden Verstärkungsrippen vorgesehen. Ein Klemmwinkel in Form eines L-Profils mit Langlöchern wird auf zwei in die Bodenplatte eingepresste Gewindebolzen gesteckt und mit Muttern verschraubt wie in Figur 26 gezeigt. Der Akku wird somit in Längsrichtung festgeklemmt. Die seitlichen, gebogenen Blechflügel und ein Spanngurt fixieren das Gehäuse im Halter.

Der Akku liegt unter dem Fußbodenbereich der Kinder und wird durch den Halter mit durchgehender Bodenplatte geschützt wie in Figur 27 gezeigt. Der Akku-Halter wird mit zwei Laschen an der Vorderseite am L-Profil sowie an der Rückseite mit einer Schelle am Fahrgestell befestigt. An vier Gewinde-Einpressbolzen werden zwei Aluminiumwinkel befestigt, welche das Gewicht des Akkus und die auftretenden Biegemomente über zwei Rohrschellen in das Mittelrohr leiten wie in Figur 27 gezeigt.

Die Ansteuerung der Motoren erfolgt mit einem linearen Daumengas und einem Maincontroller beispielsweise der Firma Clean Mobile. Um eine maximale Geschwindigkeit von 6 km/h zu erhalten, wird die Drehzahl des Motors auf 4000 min-1 begrenzt.

Als Sicherheitsanforderung sind ein Schlüsselsystem sowie eine Wegfahrsperre in Form eines Bremsdruckschalters vorzusehen. Der Wagen kann nur in Betrieb genommen werden durch gleichzeitiges Betätigen der Bremsen und Drücken des Daumengases. Erst das anschließende Lösen der Bremsen lässt das Fahrzeug losrollen. Dadurch wird ein versehentliches Aktivieren vermieden.

### Bezugszeichenliste

- 1: Mehrfachkinderwagen
- 2: Wanne
- 3: Fahrgestell
- 4: Hinterrad
- 5: Vorderrad
- 6: Inneres
- 7: Kindersitz
- 8: Sitzfläche
- 9: Rückenlehne
- 10: Betätigungsgriff
- 11: Hohlraum
- 12: Pfeil
- 13: starre Aufhängung
- 14: Nabenmotor
- 15: schwenkbare Aufhängung
- 16: Pfeil
- 17: Pfeil
- 18: Pfeil
- 19: Bodenplatte
- 20: Radnabe
- 21: Kombisystem
- 22: Gegenstück
- 23: Babyschale
- 24: Betätigungseinheit
- 25: Sensor
- 26: Sensor
- 27: Bremshebel
- 28: Gelenk
- 29: Betätigungsarm
- 30: Hinterrad
- 31: anderes Hinterrad
- 32: Getriebe
- 33: Gehäuse
- 34: Innenrad
- 35: Rollenkette
- 36: Außenradverzahnung
- 37: Innenradverzahnung
- 38: erster Transmitter
- 39: zweiter Transmitter
- 40: Vorderachse
- 41: Hinterachse
- 42: Elektromotor
- 43: weiterer Elektromotor
- 44: Batterie
- 45: DDD-Motor
- 46: HCD-Motor
- 47: Differential
- 48: Kette
- 49: zweiteilige Felge
- 50: Lager
- 51: Abtriebshülse
- 52: Verbindungselement
- 53: Lagersitz
- 54: Nut entkoppelte Stellung
- 55: Feder-Klemmelement
- 56: Nut der Muffe
- 57: Hülse
- 58: Welle mit Keilprofil
- 59: Lagersitz
- 60: Losrad
- 61: Ziehkeil
- 62: Schaltkugel
- F_{R}: Seitenkraft rechts
- F_{L}: Seitenkraft links
- α: Winkel

## Patentansprüche

1. Mehrfachkinderwagen (1) mit Sitzbereichen für mindestens zwei Kinder, wobei der Mehrfachkinderwagen (1) zumindest drei Räder (4, 5) aufweist, von denen zumindest eines durch einen mindestens einen Elektromotor umfassenden Hilfsantrieb unterstützend angetrieben ist.

2. Mehrfachkinderwagen (1) nach Anspruch 1,
wobei der Elektromotor als Nabenmotor (14) ausgebildet ist.

3. Mehrfachkinderwagen (1) nach Anspruch 1 oder 2,
wobei der Mehrfachkinderwagen (1) ein als Schwenkrad ausgebildetes Vorderrad (5) und zwei unabhängig voneinander durch jeweils einen Elektromotor antreibbare Hinterräder (4) aufweist.

4. Mehrfachkinderwagen (1) nach einem der Ansprüche 1 bis 3,
wobei der mindestens eine Elektromotor als bürstenloser Außenläufermotor ausgebildet ist.

5. Mehrfachkinderwagen (1) nach einem der Ansprüche 1 bis 4,
wobei der Hilfsantrieb einen Freilauf aufweist.

6. Mehrfachkinderwagen (1) nach einem der Ansprüche 1 bis 5,
wobei der Hilfsantrieb ein Getriebe (32) mit einer Eingangswelle und mit einer Ausgangswelle aufweist.

7. Mehrfachkinderwagen (1) nach Anspruch 8,
wobei das Getriebe (32) die folgenden Merkmale aufweist:
- ein Außenrad und ein konzentrisch zum Außenrad im Inneren des Außenrads angeordnetes Innenrad (34) sowie ein sich zwischen Außenrad und Innenrad (34) erstreckendes Zugmittel,
- wenigstens einen umlaufenden Transmitter (38, 39), der das Zugmittel vom äußeren Umfang des Innenrads (34) abhebt und an den inneren Umfang des Außenrads drückt.

8. Mehrfachkinderwagen (1) nach Anspruch 6,
wobei das Getriebe die folgenden Merkmale aufweist:
- drei Übersetzungsstufen, wobei die erste Übersetzungsstufe durch einen ersten Zahnkranz und einen vierten Zahnkranz, die zweite Übersetzungsstufe durch einen zweiten Zahnkranz und einen fünften Zahnkranz und die dritte Übersetzungsstufe durch einen dritten Zahnkranz und einen sechsten Zahnkranz gebildet ist;
- der erste Zahnkranz, der zweite Zahnkranz und der dritte Zahnkranz sind auf einer ersten Welle angeordnet und der vierte Zahnkranz, der fünfte Zahnkranz und der sechste Zahnkranz sind auf einer zweiten Welle angeordnet;
- zur Übertragung des Drehmoments ist in jeder Über-
setzungsstufe eine Getriebekette vorgesehen, wobei die erste Welle als Abtriebswelle des Elektromotors ausgebildet ist.

9. Mehrfachkinderwagen (1) nach einem der Ansprüche 6 bis 8,
wobei das Getriebe für eine Untersetzung zwischen 1:10 und 1:30 geeignet ausgebildet ist.

10. Mehrfachkinderwagen (1) nach einem der Ansprüche 1 bis 9,
wobei zumindest ein Betätigungsgriff (10) mit einer Anzahl von dem Betätigungsgriff (10) zugeordneten Sensoren (25, 26) vorgesehen ist, wobei mittels der Sensoren (25, 26) eine Betätigung des Betätigungsgriffes (10) erfassbar ist.

11. Mehrfachkinderwagen (1) nach Anspruch 10,
wobei die Ausgangssignale der Sensoren (25, 26) einer Steuereinheit des mindestens einen Elektromotors zuführbar sind.

12. Mehrfachkinderwagen (1) nach Anspruch 10 oder 11, wobei als Sensoren (25, 26) Kraftaufnehmer vorgesehen sind, die derart angeordnet sind, dass sie in Fahrtrichtung und entgegen der Fahrtrichtung am Betätigungsgriff (10) wirkende Kräfte und/oder in einem Winkel zur Fahrtrichtung wirkende Kräfte erfassen.

13. Mehrfachkinderwagen (1) nach einem der Ansprüche 10 bis 12,
wobei als Sensoren Berührungssensoren, insbesondere kapazitive Sensoren und/oder Widerstandssensoren vorgesehen sind.

14. Mehrfachkinderwagen (1) nach einem der Ansprüche 1 bis 13,
wobei die Sitzbereiche zumindest teilweise Aufnahmevorrichtungen (21) für Kindersitze (7, 23) aufweisen.
